# EUROPEAN PATENT SPECIFICATION

(11) **EP 3 129 389 B1**
(45) Date of publication and mention of the grant of the patent: **06.06.2018**
(21) Application number: 15717122.4
(22) Date of filing: 08.04.2015
(51) Int. Cl.: C08G 63/08, C07F 17/00, B01J 31/00, C08G 63/82

(54) **GROUP IVB TRANSITION METAL CATALYST CONTAINING AT LEAST ONE PENTALENE RING AS POLYMERIZATION CATALYST FOR LACTIDE POLYMERS**
GRUPPE-IVB-ÜBERGANGSMETALLKATALYSATOR MIT MINDESTENS EINEM PENTALENE-RING ALS POLYMERISATIONSKATALYSATOR FÜR LACTIDPOLYMERE
CATALYSEUR DE MÉTAUX DE TRANSITION DU GROUPE IVB CONTENANT AU MOINS UN ANNEAU PENTALENE COMME CATALYSEUR DE POLYMÉRISATION POUR LES POLYMÈRES LACTIDES

(30) Priority: 09.04.2014 GB 201406406
(43) Date of publication of application: 15.02.2017
(73) Proprietor: SCG Chemicals Co., Ltd., Bangkok 10800 (TH)
(72) Inventor: O'HARE, Dermot, Oxford Oxfordshire OX1 3TA (GB); BUFFET, Jean-Charles, Oxford Oxfordshire OX1 3TA (GB); TURNER, Zoe, Oxford Oxfordshire OX1 3TA (GB)
(74) Representative: HGF Limited
(86) International application number: PCT/EP2015/057581
(87) International publication number: WO 2015/155214

(56) References cited:
- EP-A1- 0 897 926
- EP-A2- 0 749 985
- WO-A2-2006/065809
- WO-A2-2008/110774
- CN-A- 1 566 170
- JP-A- 2005 126 627
- JP-A- 2012 153 795
- US-A1- 2005 009 687
- US-A1- 2008 249 255
- JONAS ET AL: "Mononuclear pentalene and methylpentalene complexes of titanium, zirconium, and hafnium", ANGEWANDTE CHEMIE INTERNATIONAL EDITION, WILEY - V C H VERLAG GMBH & CO. KGAA, DE, vol. 36, no. 16, 1997, pages 1714-1718, XP002085019, ISSN: 1433-7851, DOI: 10.1002/ANIE.199717141
- HUIDONG LI ET AL: "Mononuclear bis(pentalene) sandwich compounds of the first-row transition metals: variable hapticity of the pentalene rings and intramolecular coupling reactions", NEW JOURNAL OF CHEMISTRY, vol. 35, no. 8, 2011, page 1718, XP055201449, ISSN: 1144-0546, DOI: 10.1039/c1nj20144a
- YOUNGJO KIM ET AL: "Titanium Alkoxides as Initiators for the Controlled Polymerization of Lactide", INORGANIC CHEMISTRY, vol. 42, no. 5, March 2003 (2003-03), pages 1437-1447, XP055226517, EASTON, US ISSN: 0020-1669, DOI: 10.1021/ic026139n
- EMMANUEL SARIDIS ET AL: "-lactide using half-titanocene complexes of the ATiCl 2 Nu type: Synthesis, characterization, and thermal properties", JOURNAL OF POLYMER SCIENCE PART A: POLYMER CHEMISTRY, vol. 51, no. 5, March 2013 (2013-03), pages 1162-1174, XP055226526, US ISSN: 0887-624X, DOI: 10.1002/pola.26479
- NIKOLAOS PETZETAKIS ET AL: "Titanium-mediated [CpTiCl 2 (OEt)] ring-opening polymerization of lactides: A novel route to well-defined polylactide-based complex macromolecular architectures", JOURNAL OF POLYMER SCIENCE PART A: POLYMER CHEMISTRY, vol. 48, no. 5, March 2010 (2010-03), pages 1092-1103, XP055226572, US ISSN: 0887-624X, DOI: 10.1002/pola.23864
- DATABASE CA [Online] CHEMICAL ABSTRACTS SERVICE, COLUMBUS, OHIO, US; 2009, PRIFTIS, DIMITRIOS ET AL: "Surface-Initiated Titanium-Mediated Coordination Polymerization from Catalyst-Functionalized Single and Multiwalled Carbon Nanotubes", XP002750662, retrieved from STN Database accession no. 2009:422982
- DATABASE CA [Online] CHEMICAL ABSTRACTS SERVICE, COLUMBUS, OHIO, US; 2010, HSIAO, TING-JUI ET AL: "Stereoregular Diblock Copolymers of Syndiotactic Polystyrene Derivatives and Polylactide : Syntheses and Self-Assembled Nanostructures", XP002750664, retrieved from STN Database accession no. 2010:1608308
- JUN OKUDA ET AL: "Indenyl effect in d0-transition metal complexes: synthesis, molecular structure and lactone polymerization activity of [Ti([eta]5-C9H7)Cl2OMe)]", JOURNAL OF ORGANOMETALLIC CHEMISTRY., vol. 501, no. 1-2, October 1995 (1995-10), pages 37-39, XP055226850, CH ISSN: 0022-328X, DOI: 10.1016/0022-328X(95)05590-L
- METZ M V ET AL: "WEAKLY COORDINATING AL-, NB-, TA-, Y-, AND LA-BASED PERFLUOROARYLOXYMETALATE ANIONS AS COCATALYST COMPONENTS FOR SINGLE-SITE OLEFIN POLYMERIZATION", ORGANOMETALLICS, ACS, WASHINGTON, DC, US, vol. 21, no. 18, 2 September 2002 (2002-09-02), pages 3691-3702, XP001126455, ISSN: 0276-7333, DOI: 10.1021/OM020087S

## Description

The present invention relates to the production of poly(lactic acids). It, further, relates to metal complexes that are useful as catalysts/initiators in lactide polymerisation.

Poly(lactic acids) (PLAs) have been studied intensely during the past few decades because of their biodegradability and biocompatibility, PLA possesses versatile physical properties and has been used in medical applications and tissue engineering such as media for controlled drug release. Ring opening polymerisation (ROP) of lactide (LA) by single-site initiators is the most efficient route to PLAs with controlled molecular weight and narrow molecular weight distribution. The two stereogenic centres in one lactide molecule results in three distinct configurational isomers (*S*,*S*)-LA, (*L*-LA); (*R*,*R*)-LA, (*D*-LA) and (*R*,*S*)-LA, (*meso*)-LA. The 1:1 mixture of (*S*,*S*)-LA and (*R,R*)-LA is referred to as *rac*-LA.

Metal complexes useful for initiating ring opening polymerisation of lactides are known.

Wenshan Ren et al, Inorganic Chemistry Communications, 30, (2013), 26-28 report that benzyl thorium metallocenes [η⁵-1,3-(Me₃C)₂C₅H₃]₂ Th(CH₂Ph)₂ (1) and [η⁵-1,2,4-(Me₃C)₃C₅H₂]₂ Th(CH₂Ph)₂ (2) can initiate the ring opening polymerisation (ROP) of racemic-factide (*rac*-LA) under mild conditions. Complete conversion of 500 equiv of lactide occurs within 5h at 40°C in dichloromethane at [*rac*-LA]=1.0 mol L⁻¹, and the molecular weight distribution is very narrow (ca.1.15) over the entire monomer-to-initiator range, indicating a single-site catalyst system.
Yalan Ning et al, Organometallics 2008, 27, 5632-5640 report four neutral zirconocene bis(ester enolate) and non-zirconocene bis(alkoxy) complexes employed for ring-opening polymerisations and chain transfer polymerisations of L-lactide (*L*-LA) and ε-caprofactone (ε-CL).
A J Chmura et al, Chem. Commun. 2008, 1293, found that zirconium and hafnium amine tris(phenolate) alkoxides are extremely active, yielding highly heterotactic polylactide.
US2005/0009687 describes titanium alkoxide catalysts for polymerization of cyclic esters.
US2008/249255 describes the polymerisation of cyclic esters using a catalytic amount of a Group IV transition metal hydride.
Youngjo Kim et al, Inorg. Chem., 2003, 42 (5), pp 1437-1447 describes titanium alkoxides as initiators for the controlled polymerisation of lactide.
Emmanuel Saridis et al, Journal of Polymer Science, Part A: Polymer Chemistry, Volume 51, Issue 5, pp 1162-1174 describes the ring-opening polymerisation of L-lactide using half-titanocene complexes of the ATiCl₂Nu type.
Nikolaos Petzetakis et al, Journal of Polymer Science, Part A: Polymer Chemistry, Volume 48, Issue 5, pp 1092-1103 describes the titanium-mediated [CpTiCl₂(OEt)] ring-opening polymerisation of lactide.
Priftis et al, Macromolecules, 2009, 42 (9) pp 3340-3346 describes the surface-initiated titanium-mediated coordination polymerisation from catalyst-fuctionalised single and multiwalled carbon nanotubes.
Hsiao et al, Macromolecules, 2009, 42 (8) pp 3073-3085 describes stereoregular diblock copolymers of syndiotactic polypropylene and polyesters.
Jun Okuda et al, Journal of Organometallic Chemistry, 501 (1-2) 37-39 describes the indenyl effect in dO-transition metal complexes.
JP2012-153795 describes an injection molded article comprising a polyethylene resin composition.
JP2005-126627 describes catalysts for addition polymerisation.
Metz et al, Organometallics, vol. 21, no. 18 ,2002, pages 3691-3702 describes weakly coordinating AI-, Nb, Ta, Y- and La-based perfluoroaryloxymetalate anions as cocatalyst components for single-site olefin polymerisation.
CN1566170A describes a method for the preparation of a functional polyolefin block copolymer.
WO2006/065809 describes heteroatom bridged metallocenes compounds for olefin polymerisation.

The following documents all disclose Pentalene Sandwich or half-Sandwich complexes with group IVB metals:
EP0897926; K. Jonas et al in Angew. Chem. IEE 1007, 36(16), 1714-1718; WO2008/110774; H. F. Schaefer in New J. chem. 2011, 35, 1718-1729; EP0749985.

The present invention is based on the discovery of a different class of compounds which have use as initiators for the polymerisation of lactide monomers.

The present invention provides a compound having the formula

LₐM(OR¹)_{b}R²_{c}X_{d}

wherein
M is a metal selected from Ti, Zr and Hf;
L is a ligand selected from permethylpentalene (Pn*=C₈Me₆), (hydro)permethylpentalene(Pn*(H)=C₈Me₆H) and (hydro)pentalene (Pn(H)=C₈H₈);
R¹ is a 1-6 C alkyl, substituted or unsubstituted phenyl, or a substituted or unsubstituted phenylalkylene group;
R² is Me or Et
X is halogen
a = 1 to 3, b = 1 to 3, c = 0 or 1 and d = 0, 1, 2 or 3
and dimers thereof.
Also described herein, but not belonging to the invention, are compounds having the formula LₐM(OR¹)_{b}R²_{c}X_{d}, wherein L is a ligand selected from cyclopentadiene (Cp=C₅H₅), indene (C₇H₇) and ethylene- or silane-bridged indene, and M, R¹, R², X, a, b, c and d are as defined above.

Pentalenes, referred to above, have the structures shown below: 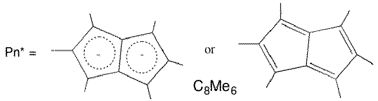 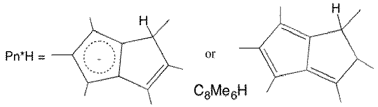 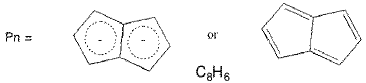 The silane-bridge can be optionally substituted with a range of alkyl groups. The SBI ligand refers to the di-methyl silane bridged indenyl ligand.

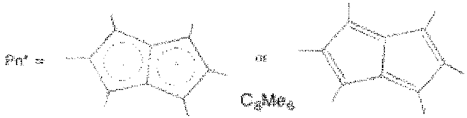

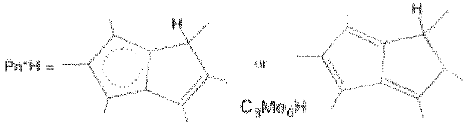

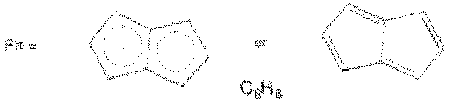

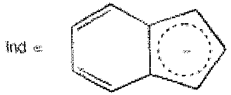

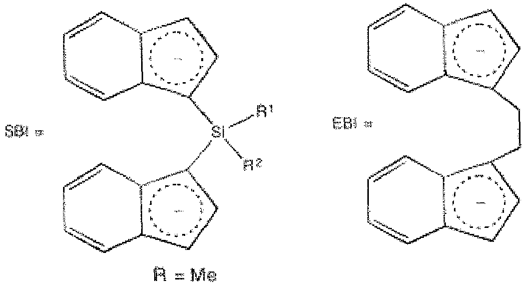

The present invention, further, provides the use of a compound of the invention as an initiator in the polymerisation of a lactide monomer.

The present invention, yet further, provides a process for producing a polylactide which comprises contacting a lactide monomer with a compound of the invention.

As stated above, compounds of the present invention have the general formula

LₐM(OR¹)_{b}R²_{c}X_{d}

where L, M, R¹, R², X, a, b, c and d are as defined above, and dimers thereof.

M is a Group IV transition metal selected from titanium, zirconium and hafnium. According to one preferred embodiment, M is titanium. According to another preferred embodiment, M is zirconium. According to a different embodiment, M is hafnium.

L is a ligand selected from permethylpentalene(Pn*), (hydro)permethylpentalene(Pn*(H)) and (hydro)pentalene(Pn(H)). According to one preferred embodiment, the ligand group L is permethylpentalene. Also described herein, but not belonging to the invention, are compounds where L is a ligand selected from cyclopentadiene (Cp), indene and ethylene-bridged indene (EBI) and dimethylsilane-bridged indene (SBI). Also described herein, but not belonging to the invention, are compounds in which the ligand group L is indene or EBI when M is Zr.

The compounds of the present invention are alkoxide, phenyloxide or phenylalkyleneoxide metal complexes based on the ligand group L. R¹ of the OR¹ group attached to the metal M is selected from 1-6C alkyl, substituted or unsubstituted phenyl and substituted or unsubstituted phenylalkylene. Preferably, the 1-6C alkyl group, for R¹, is a tertiary butyl group. Preferably, when R¹ is a phenyloxide group, it is a dialkylphenyloxide group of the formula -C₆H₃(R³)₂ where R³ is a 1-4C alkyl group, especially Me, ⁱPr or ^{t}Bu. According to a preferred embodiment, R¹ is selected from 2,6-dimethylphenyl, 2,6-diisopropylphenyl and 2,6-ditertiarybutylphenyl.

R¹ may, according to a different embodiment, be a substituted or unsubstituted phenylalkylene group as mentioned above. Examples include -CH₂C₆H₅ and -CH(Me)C₆H₅.

The metal complexes of the invention may contain one R² group attached to the metal M. If present, R² is selected from Me and Et. If R² is present in the complex, it is preferably methyl.

The metal complexes of the invention may contain a halogen group X attached to M. Preferably, if present, X is Cl. Typically, if X is present in the complex, the value of d is 1 or 2.

According to a preferred embodiment, the compound of the invention is a (half)metallocene complex being
η⁵-Pn*(H)Ti(O^{t}Bu)₃; or
η⁵-Pn*(H)Zr(O^{t}Bu)₃ ; or
η⁵-Pn*(H)Zr(O-CH₂C₆H₅)₃ ; or
η⁵-Pn*(H)Zr(O-*S*-CH(CH₃)C₆H₅)₃; or
*rac*-η⁵-Pn*(H)Zr(O-*rac*-CH(CH₃)C₆H₅)₃ ; or
η⁵-Pn*(H)Zr(O-2,6-Me-C₆H₃)₃; or
η⁵-Pn*(H)Zr(O-2,6-ⁱPr-C₆H₃)₃ ; or
η⁵-Pn*(H)ZrCl₂(O-2,6-^{t}Bu-C₆H₃) ; or
η⁵-Pn*(H)Hf(O-2,6-Me-C₆H₃)₃ ; or
η⁵-Pn*(H)HfCl(O-2,6-ⁱPr-C₆H₃)₂ ; or
η⁵-Pn*(H)HfCl₂(O-2,6-^{t}Bu-C₆H₃).

The compounds above may be made, for instance, by the reaction of η⁵-Pn*(H)SnMe₃ with the corresponding metal chloride, e.g. TiCl₄, ZrCl₄ or HfCl₄, in benzene at 80°C for 2-72 h and then with the appropriate potassium alkoxide, potassium phenyloxide or potassium phenylalkyleneoxide at room temperature in benzene or toluene. However, any suitable process for preparing the compounds known in the art may be used for preparation thereof.

According to a different preferred embodiment, the (half)metallocene complex of the invention is
[(Pn*)Ti(O-2,6-Me-C₆H₃)Cl] ; or
[η⁸-(Pn*)Ti(O-2,4-^{t}Bu-C₆H₃)Cl] ; or
[η⁸-(Pn*)Ti(O-2,6-Me-C₆H₃)₂] ; or
[η⁸-(Pn*)Ti(O^{t}Bu)Cl] ; or
[η⁸-(Pn*)Ti(O^{t}Bu)₂ ; or
[η⁵-(Pn*H)Ti(O-2,6-Me-C₆H₃)Cl₂] ; or
[η⁵-(Pn*H)Ti(O-2,6-Me-C₆H₃)₃].

The above compounds may be produced, for example, by the reaction of one equivalent of [η⁸-(Pn*)TiCl(µ-Cl)]₂ with two equivalents of KOR (where R = 2,6-MeC₆H₃ or 2,4-^{t}BuC₆H₃) at room temperature in toluene for 24-48 h. However, any suitable process for preparing the compounds known in the art may be used for preparation thereof.

Also described herein, but not belonging to the invention, are the (half)metallocene complexes:
[(EBI)Zr(O-2,6-Me-C₆H₃)Cl] ;
[Ind₂Zr(O-2,6-Me-C₆H₃)Me];
[Ind₂Zr(O-2,6-Me-C₆H₃)CI];
[Ind₂Zr(O-2,6-Me-C₆H₃)₂];
[Cp₂Zr(O-2,6-Me-C₆H₃)₂];
[Cp₂Zr(O-2,6-Me-C₆H₃)Cl];
[Cp₂Zr(O-2,6-Me-C₆H₃)Me].

The above EBI Zr compounds may be produced by reacting stoichiometric amounts of [K(O-2,6-Me-C₆H₃)] and *rac*-[(EBI)ZrCl₂] in toluene with stirring for 18 h at room temperature. A modified procedure for preparing [(Ind)₂Zr(O^{t}Bu)Me] involves reacting stoichiometric amounts of [(Ind)₂ZrMe₂] and *tert*-butanol in toluene with stirring at room temperature for 18 h, followed by concentration in vacuum. [(Ind)₂Zr(O-2,6-Me-C₆H₃)Me] can be prepared by reacting stoichiometric amounts of [(Ind)₂ZrMe] and 2,6-dimethylphenol in toluene with stirring at room temperature for 18 h, followed by concentration *in vacuo.* However, any suitable process for preparing the compounds known in the art may be used for preparation thereof.

The compounds of the invention are useful as initiators in the polymerisation of a lactide monomer. Accordingly, the present invention also relates to the use of a compound as hereinbefore described as an initiator in the polymerisation of a lactide monomer.

According to a further aspect, the invention provides a process for producing a polylactide which comprises contacting a lactide monomer with a compound as hereinbefore described.

In a preferred embodiment of the process, the lactide monomer is L-lactide and the resulting polylactide is isotactic polylactide. In another preferred embodiment of the process, the lactide monomer is *rac*-lactide and the resulting polylactide is atactic polylactide.

### EXPERIMENTAL DETAIL I - relating to permethylpentalenes

### General Procedure

All organometallic syntheses were performed under an inert atmosphere of nitrogen gas, utilizing standard Schlenk techniques on a dual vacuum-inlet gas manifold or Braun glove box. Where necessary, solvents were dried SPS drying system (hexane, pentane, toluene). Deuterated NMR solvents were dried over NaK (benzene-*d*₆, toluene-*d*₈) or CaH₂ (chloroform-*d*₁), vacuum transferred and free-pump-thaw-degassed three times prior to use. Elemental analyses were conducted by Mr Stephen Boyer at the elemental analysis service at London Metropolitan University. NMR spectra were recorded using Young's tap NMR tubes on a Varian Mercury VX-Works 300 MHz spectrometer. ¹H and ¹³C{¹H} NMR spectra were referenced via the residual protio-solvent peak. Potassium *tert*-butoxide was purchased from Sigma-Aldrich and used as received. *L*- and *rac-* lactide were purchased from Alfa Aesar and re-crystallized and sublimed (10⁻² mbar, 50°C) prior to use. [K(O-2,6-Me-C₆H₃)] and [K(O-2,4-*^{t}*Bu-C₆H₃)] were prepared by stirring potassium bis(trimethylsilyl)amide with the appropriate alcohol in THF at room temperature.

### X-ray crystallography

Crystals were mounted on glass fibres using perfluoropolyether oil, transferred to a goniometer head on the diffractometer and cooled rapidly to 150K in a stream of cold nitrogen using an Oxford Cryosystems CRYOSTREAM unit. Data collections were performed using an Enraf-Nonium FR590 KappaCCD diffractometer, utilising graphite-monochromated Mo K_{α} X-ray radiation (λ = 0.71073 Å). Intensity data were processed using the DENZO-SMN package. Structures were solved using the direct-methods program SIR92, and refined using full-matrix least squares refinement on all F² data using the CRYSTALS program suite.

### Polymerisation procedure

All polymerizations were carried out in Young's tap NMR tubes containing 0.4 mL of a benzene-*d*₆ solution of lactide with an initial lactide concentration of [LA]₀ = 0.104 M and 0.1 mL of a benzene-*d*₆ solution of catalyst (of a concentration to ensure [LA]₀/[init.]₀ = 50). Lactide conversion was subsequently calculated by comparing the integration values of the methane signal of PLA and lactide monomer in the ¹H NMR spectrum. The temperature at which a given polymerisation was carried out varied in the temperature range 80 to 100°C and is noted in the appropriate section.

Further advantages and features of the subject-matter of the present invention can be taken from the following detailed description taking in conjunction with the drawing, in which;

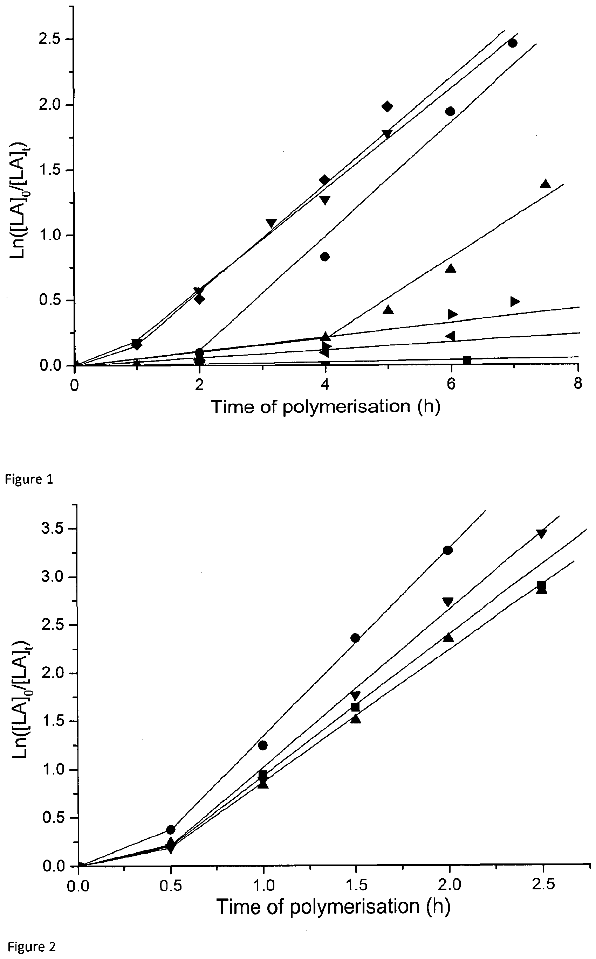

**Figure 1****:** *L*-lactide polymerization using the complexes: η⁵-Pn*(H)Ti(O-2,6-Me₂C₆H₃)₃, 2 (black square, *k*_{obs} = 0.113±0.014 h⁻¹), η⁵-Pn*(H)Zr(O-2,6-Me₂C₆H₃)₃, 7 (red circle, *k*_{obs}= 0,479±0.032 h⁻¹), η⁵-Pn*(H)Zr(O-2,6-ⁱPr₂C₆H₃)₃, 8 (pink triangle, *k*_{obs}= 0.391±0.022 h⁻¹), η⁵-Pn*(H)ZrCl₂(O-2,6-ⁱBu₂C₆H₃), 9 (dark blue triangle, k_{obs}= 0.043±0.003 h⁻¹), η⁵-Pn*(H)Hf(O-2,6-Me₂C₆H₃)₃, 10 (blue triangle, *k*_{obs}= 0.364±0.027 h⁻¹), η⁵-Pn*(H)HfCl (O-2,6-ⁱPr₂C₆H₃)₂, 11 (green losange, *k*_{obs}= 0.463±0.029 h⁻¹) -and η⁵-Pn*(H)HfCl₂(O-2,6-ⁱBuC₆H₃), 12 (purple triangle, *k*_{obs}= 0.086±0.020 h⁻¹). Polymerisation conditions:chloroform-*d*₁ at 100 °C with [LA]₀/[M]₀ = 50, [LA]₀ = 0.5M.
**Figure 2****:** Lactide polymerisation: *L*-lactide and *S*-η⁵-Pn*(H)Zr(O-CH{CH₃}C₆H₅)₃, 5 (black square, *k*_{obs}= 1,166±0068 h⁻¹); *L*-lactide and *rac*-η⁵-Pn*(H)Zr(O-CH{CH₃}C₆H₅)₃, 6 (red circle, *k*_{obs}= 1.954±0.063 h⁻¹); *rac*-lactide and *rac*-η⁵-Pn*(H)Zr(O-CH{CH₃}C₆H₅)₃, 6 (pink triangle, *k*_{obs}= 1.667±0.053 h⁻¹); *rac*-lactide and S-η⁵-Pn*(H)Zr(O-CH{CH₃}C₆H₅)_{3,} 5 (blue triangle, *k*_{obs}= 1.342±0.055 h⁻¹). Polymerisation conditions:chloroform-*d*₁ at 80 °C with [LA] ₀/[M]₀ = 50, [LA]₀ = 0.5 M.

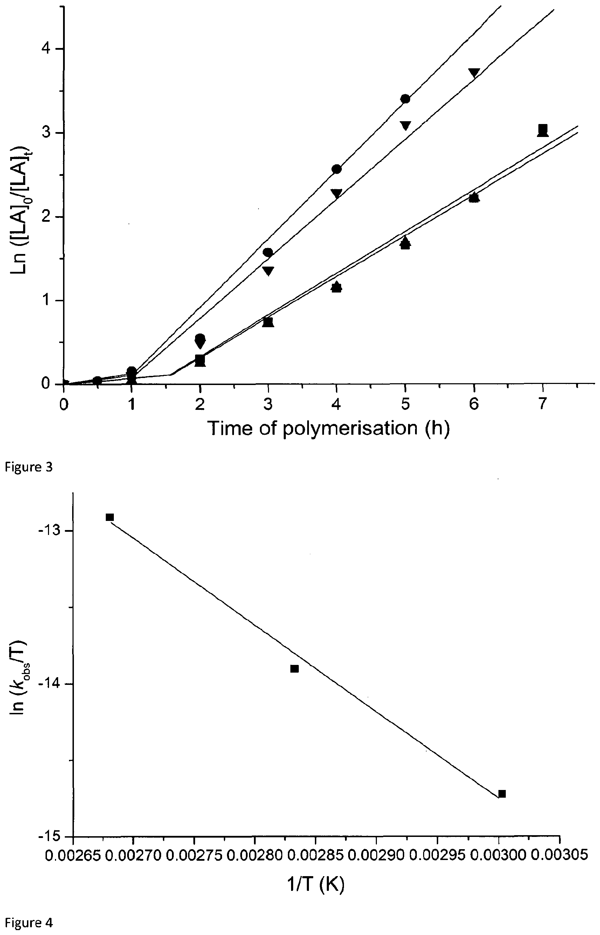

**Figure 3****:** Lactide polymerisation: *L*-lactide and *S*-η⁵-Pn*(H)Zr(O-CH{CH₃}C₆H₅)₃, 5 (black square, *k*_{obs}= 0.484±0.037 h⁻¹); *L*-actide and *rac*-η⁵-Pn*(H)Zr(O-CH{CH₃}C₆H₅)₃, 6 (red circle, *k*_{obs}= 0.850±0.063 h⁻¹); *rac*-lactide and *rac*-η⁵-Pn*(H)Zr(O-CH{CH₃}C₆H₅)₃ 6 (pink triangle, *k*_{obs}= 0.767±0.037 h⁻¹); *rac*-lactide and *S*-n⁵-Pn*(H)Zr(O-CH{CH₃}C₆H₅)₃, 5 (blue triangle, *k*_{obs}= 0.491±0.031 h⁻¹). Polymerisation conditions:chloroform-*d*₁ at 60 °C with [LA] ₀/[M]₀ = 50, [LA]₀ = 0.5 M.
**Figure 4****:** Eyring plot of *L*-lactide polymerisation using *S*-η⁵-Pn*(H)Zr(O-CH{CH₃}C₆H₅)₃. 5. Slope = -5610±488 with *R*²= 0.993. Polymerisation conditions: chloroform-*d*₁ with [LA]₀/[Zr]₀ = 50 and [LA]₀ = 0.5 M.

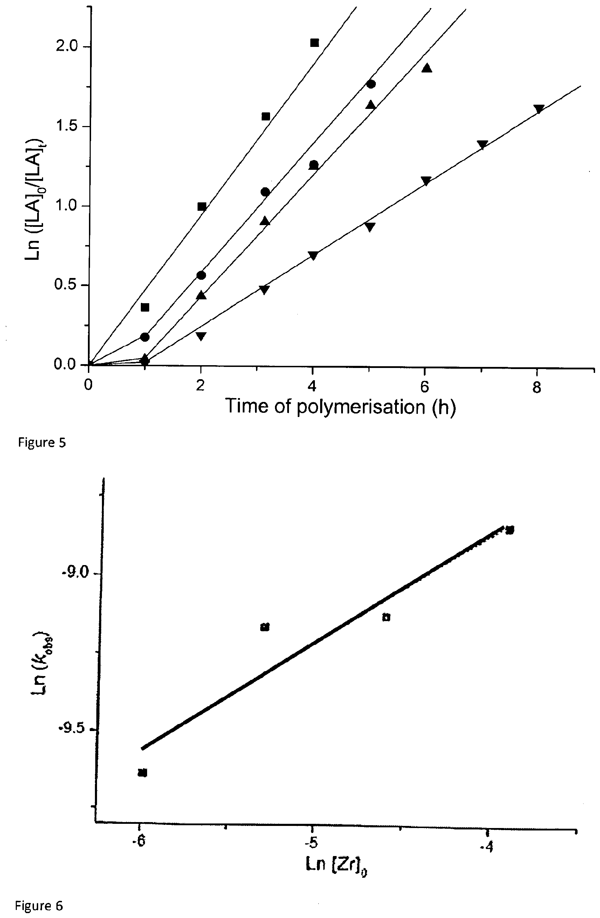

**Figure 5****:** *L*-lactide polymerisation using η⁵-Pn*(H)Zr(O-2,6-ⁱPr₂C₆H₃)₃, 8: [LA]₀/[Zr]₀ = 25 (black square, *k*_{obs}= 0.521±0.021 h⁻¹); [LA]₀/[Zr]₀ = 50 (red circle, *k*_{obs}= 0.391±0.02.2 h⁻¹); [LA]₀/[Zr]₀ = 100 (blue triangle, *k*_{obs}= 0.377±0.015 h⁻¹); [LA]₀/[Zr]₀ = 200 (pink triangle, *k*_{obs}= 0.235±0.004 h⁻¹). Polymerisation conditions:chloroform-*d*₁ at 100 °C with [LA]₀ = 0.5 M.
**Figure 6****:** Plot of Ln(*k*_{obs}) vs Ln([Zr]₀) using η⁵-Pn*(H)Zr(O-2,6-ⁱPr₂C₆H₃)₃, 8. Slope = 0.350±82 with *R*² = 0.901. Polymerisation conditions: chloroform-*d*₁ at 100 °C and [LA]₀ = 0.5 M.

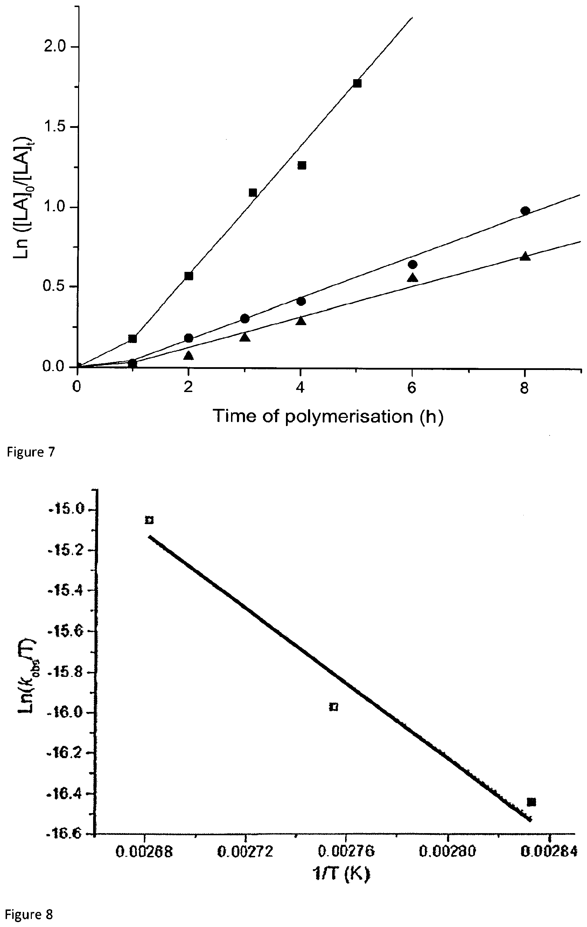

**Figure 7****:** *L*-lactide polymerisation using η⁵-Pn*(H)Zr(O-2,6-ⁱPr₂C₆H₃)₃, 8: T = 100 °C (black square, *k*_{obs} = 0,391±0.022 h⁻¹); T = 90 °C (red circle, *k*_{obs} = 0.151±0.008 h⁻¹); T = 80 °C (blue triangle, *k*_{obs} = 0.092±0.006 h⁻¹). Polymerisation conditions: chloroform-*d*₁ with [LA]₀/[M]₀ = 50, [LA]₀ = 0.5 M.
**Figure 8****:** Eyring plot of polymerisation using η⁵-Pn*(H)Zr(O-2,6-ⁱPr₂C₆H₃)₃, 8. Slope = -9133±1881 with *R*² = 0.959. Polymerisation conditions: chloroform-*d*₁ with [LA]_{0/}[Zr]₀ = 50 and [LA]₀ = 0.5 M.

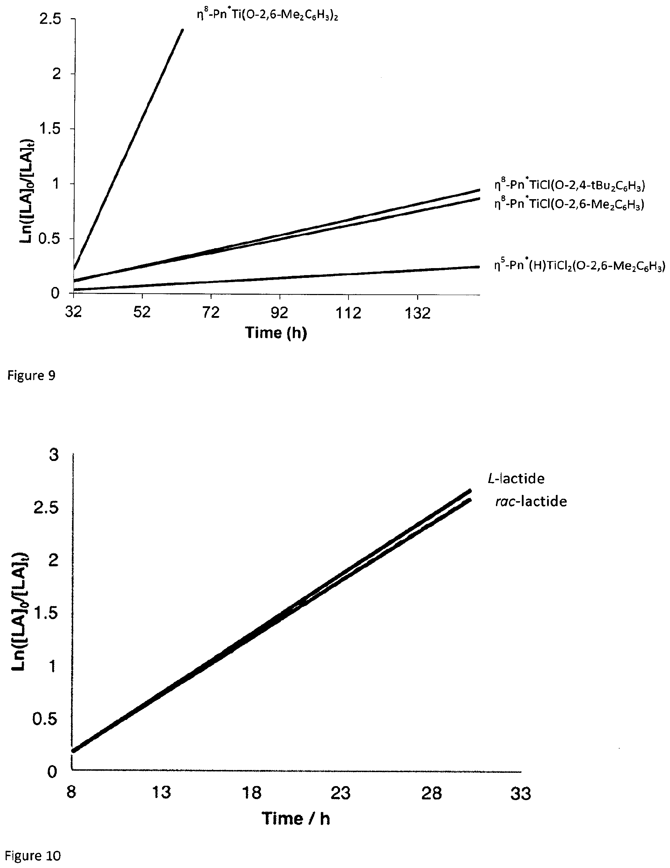

**Figure 9****:** Semi-logarithmic plots of *L*-iactide conversion *us* time, [LA]₀/[Init]₀ = 50, [LA]₀ = 0.104 M, T = 80 °C, benzene-*d*₆ (0.5 mL), using [*η*⁸-(Pn*)Ti(O-2,6-Me₂C₆H₃)Cl], (green dotted line), [*η*⁸-(Pn*)Ti(O-2,4-^{t}Bu₂C₆H₃)Cl] (black dashed line), [*η*⁸-(Pn*)Ti(O-2,-6-Me₂C₆H₃)₂], (red line) and [*η*⁵-(Pn*H)Ti(O-2,6-Me₂C₆H₃)Cl₂] (blue dot-dashed line). Induction period omitted.
**Figure 10****:** Semi-logarithmic plots of lactide monomers conversion *us* time. Induction period omitted. [LA]₀ = 0.104 M, [LA]₀/[init.]₀ = 50, T = 90 °C, benzene-*d*₆. Polymerization using [*η*⁸-(Pn*)Ti(O-2,6-Me₂C₆H₃)₂], *L*-lactide (red line) and *rac*-lactide (black dashed line).

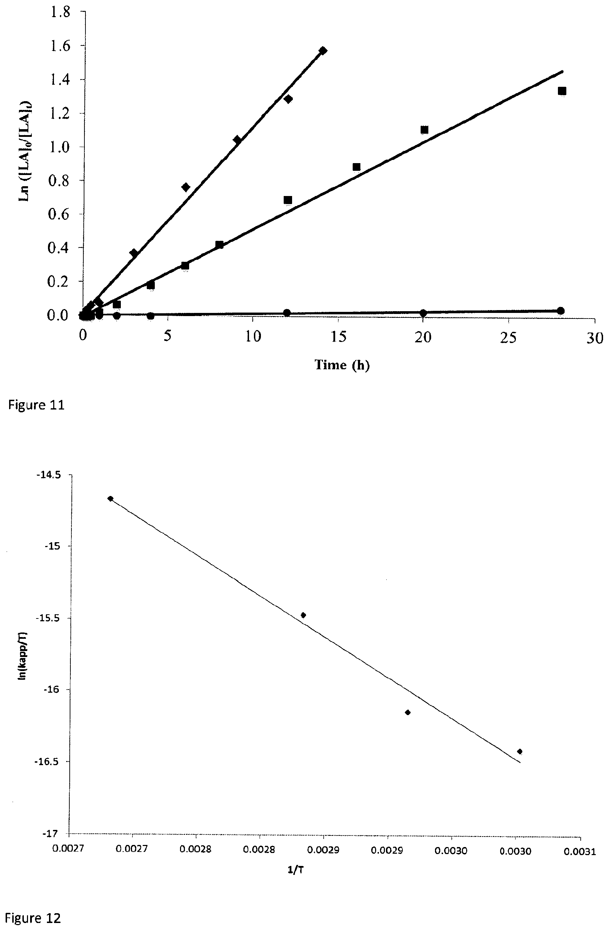

**Figure 11****:** Semi-logarithmic plots of *L*-lactide conversion *vs* time, [LA]₀/[Init]₀ = 50, [LA]₀ = 0.50 M, *T* = 80 °C, chloroform-*d*₁, (0.5 mL), polymerisation using [(EBI)Zr(OC₆H₃Me₂-2,6)Cl], 1 (dotted line), [(Ind)₂Zr(O^{t}Bu)Me], 2 (solid line), [(Ind)₂Zr(OC₆H₃Me₂-2,6)Me], 3 (dashed line).
**Figure 12****:** Semi-logarithmic plots of the rate of propagation *vs*. the inverse of the temperature, [LA]₀/[2]₀ = 50, [LA]₀ = 0.50M, chloroform-*d*₁, ΔH^{‡} = 46.9 kJ.mol⁻¹ and ΔS^{‡} = -193.9 J.K⁻¹.mol⁻¹.

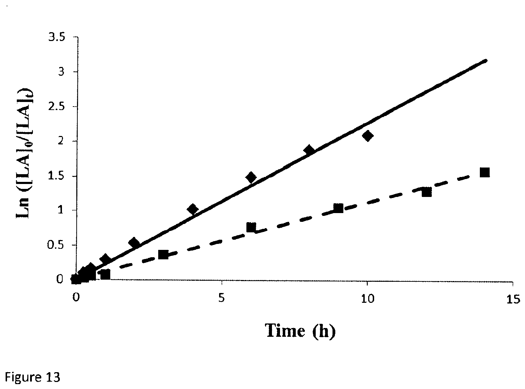

**Figure 13****:** Semi-logarithmic plots of lactide conversion vs time, [LA]₀/[2]₀ = 50, [LA]₀ = 0.50 M, *T* = 80 °C, chloroform-*d*₁ (0.5 mL); *L*-lactide (solid line), *rac*-lactide (dashed line).

### EXAMPLE 1

**Synthesis of [(Pn*)Ti(O-2,6-Me-C₆Me₂)Cl]** [η⁸-(Pn*)TiCl(µ-Cl)]₂ (150 mg, 0.26 mmol) and [K(O-2,6-MeC₆H₃)] (78 mg, 0.50 mmol) were combined in toluene (30 mL) and left to stir for 25 h at room temperature. The resultant solution was filtered before being concentrated *in vacuo.* X-ray quality single crystals were obtained on storing the toluene concentrated solution at -35°C for 24 h. Yield = 52%. ¹H NMR (benzene-*d*₆, 25°C, 300 MHz): δ 7.04 (d, 2H, ³*J*_{HH} = 7.3 Hz, Ar-*H*), 6.82 (t, 1H, ³*J*_{HH} = 7.4 Hz, Ar-*H*), 2.11, 2.06, 1.68 (s, 6H each, Pn-C*H*₃), 1.61 (s, 6H, Ar-C*H*₃). ¹³C{¹H} NMR (toluene-*d*₈, 25°C, 75.1 MHz): δ 130.69, 126.16, 14.36, 123.41, 120.41 (Quaternary Carbons), 18.09 (Ar-CH₃) 13.20, 12.47, 11.11 (Pn-CH₃). The quaternary bridgehead carbon atoms were not observable and certain quaternary carbon signals were obscured by solvent resonances. Analysis calculated for C₂₂H₂₇ClTiO (%): C, 67.62, H, 6.98; found: C, 67.70; H, 7.03.

### EXAMPLE 2

**Synthesis of [η⁸-(Pn*)Ti(O-2,4-Bu-C₆H₃)Cl]** [η⁸-(Pn*)TiCl(µ-Cl)]₂ (150 mg, 0.25 mmol) and [K(O-2,4-*^{t}*Bu-C₆H₃)] (120 mg, 0.50 mmol) were stirred in toluene (30 mL) at room temperature for 48 h. The resultant solution was filtered and the solvent removed *in vacuo.* Subsequent dissolution in minimal hot benzene and storing at room temperature for 24 h led to the formation of X-ray quality single crystals. Yield = 55%. ¹H NMR (benzene-*d*₆, 25°C, 300 MHz): δ 7.54 (d, 1H, ⁴*J*_{HH} = 2.4 Hz, *meta*-Ar-*H*), 7.18 (dd, 1 H, ³*J*_{HH} = 8.1 Hz, ⁴*J*_{HH} = 2.4 Hz, *meta*-Ar-*H*), 6.41 (d, 1H, ³*J*_{HH} = 8.3 Hz, *ortho*-Ar-*H*), 2.07, 1.80, 1.64 (s, 6H each, Pn-C*H*₃), 1.59 (s, 9H, C(C*H*₃)), 1.35 (s, 9H, C(C*H*₃)). ¹³C{¹H} NMR (benzene-*d*₆, 25°C, 75.1 MHz): δ 161.21 (*ipso-Ar*), 142.66, 140.76, 139.1,0 135.5,7 130.28, 124.62 (quaternary carbons), 123.82, 123.77 (*meta-Ar*) 122.82 (quaternary carbon) 121.22 (*ortho*-*Ar*), 35.55, 34.55 (Ar-*C*M₃), 31.95, 30.88 (Ar-*C*H₃), 13.04, 12.48, 10.84 (Pn-*C*H₃). Analysis calculated for C₂₈H₃₉TiClO (%): C, 70.8; H, 8.29; found: C, 70.65; H, 8.23.

### EXAMPLE 3

**Synthesis of [η⁸-(Pn*)Ti(O-2,6-Me-C₆H₃)₂]** [η⁸-Pn*TiCl(µ-Cl)]₂ (150 mg, 0.25 mmol) and [K(O-2,6-Me-C₆H₃)] (160 mg, 0.50 mmol) were stirred in toluene (30 mL) for 24 h at 25°C. The resultant solution was filtered and subsequently concentrated *in vacuo.* X-ray quality single crystals were obtained on storing the toluene concentrated solution at -35°C for 24 h. Yield = 62%. ¹H NMR (benzene-*d*₆, 25°C, 300 MHz): δ 6.96 (d, 4H, ³*J*_{HH} = 7.5 Hz, *meta*-Ar-*H*), 6.69 (t, 2H, ³*J*_{HH} = 7.3 Hz, *para*-Ar-*H*), 2.13 (s, 12H, Pn-C*H*₃), 1.81 (s, 12H, ArC*H*₃), 1.77 (s, 6H, Pn-C*H*₃). ¹³C{¹H} NMR (benzene-*d*₆, 25°C, 75.1 MHz): δ 162.52 (*ipso-Ar*), 139.73 130.97 125.22 120.47 118.89 (quaternary carbons), 17.73 (Ar-*C*H₃), 11.90 10.89 The quaternary bridgehead carbon atoms were not observable. Analysis calculated for C₃₀H₃₆TiO₂ (%): C, 75.62; H, 7.63; Found: C, 75.48; H, 7.77.

### EXAMPLE 4

**Synthesis of [η⁸-(Pn*)Ti(O*^{t}*Bu)Cl]** [η⁸-(Pn*)TiCl(µ-Cl)]₂ (150 mg, 0.25 mmol) and [K(O*^{t}*Bu)] (53 mg, 0.50 mmol) were combined in toluene (30 mL) and left to stir for 2 h at room temperature. The resultant solution was filtered and the solvent was removed under reduced pressure. Minimal hot hexane was added and X-ray quality single crystals were obtained on cooling to room temperature and storing at -35°C for 24 h. Yield = 54%. ¹H NMR (benzene-*d*₆, 25°C, 300 MHz): δ 2.09, 1.90, 1.62 (s, 6H each, Pn-C*H*₃), 1.31 (s, 9H, C(C*H*₃)). ¹³C{¹H} NMR (benzene-*d*₆, 25°C, 75.1 MHz): δ 138.41, 136.38 (*Pn-bridgehead*), 128.86, 122.16, 121.91 (*Pn*), 81.16 (*C*(CH₃)), 32.48 (C(*C*H₃)), 13.09, 12.85, 10.86 (Pn-CH3).

### EXAMPLE 5

**Synthesis of [η⁸-(Pn*)Ti(O*^{t}*Bu)₂]** [η⁸-(Pn*)TiCl(µ-Cl)]₂ (20 mg, 0.035 mmol) and [K(O*^{t}*Bu)] (16 mg, 0.14 mmol) were combined in benzene-*d*₆ (1 mL). The resulting dark red solution was filtered and allowed to undergo a slow evaporation, which led to the formation of X-ray quality single crystals. ¹H NMR (benzene-*d*₆, 25°C, 300 MHz): δ 2.08 (s, 12H, Pn-C*H*₃), 1.76 (s, 6H, Pn-C*H*3), 1.31 (s, 18H, C(C*H*₃)). ¹³C{¹H} NMR (benzene-*d*₆, 25°C, 75.1 MHz): 134.38, 128.71, 116.58 (*Pn*) 76.44 (C(C*H*₃)) 33.60 (C(C*H*₃)) 13.07, 10.81 (Pn-*C*H₃). The quaternary bridgehead carbon atoms were not observable.

### EXAMPLE 6

**Synthesis of [η⁵-(Pn*H)Ti(O-2,6-Me-C₆H₃)Cl)₂]** [η⁸-Pn*TiCl(µ-Cl)]₂ (350 mg, 0.57 mmol) and [H(O-2,6-Me-C₆H₃)] (139 mg, 1.14 mmol) were stirred in toluene (50 mL) at 85°C for 24 h, before being filtered and concentrated under vacuum. X-ray quality single crystals were formed on storing the concentrated solution at -35°C for 24 h. Yield = 68%. ¹H NMR (benzene-*d*₆, 25°C, 300 MHz): δ 6.82-6.72 (m, 3H, Ar-*H*), 3.19 (q, 1H, ³*J*_{HH} = 7.3 Hz, Pn-*H*), 2.24 (s, 6H, Ar-C*H*₃), 2.23, 2.12, 2.08, 1.79, 1.44 (s, 3H each, Pn-C*H*₃), 0.84 (d, 3H, ³*J*_{HH} = 7.5 Hz, Pn-C*H*₃). ¹³C{¹H} NMR (benzene-*d*₆, 25°C, 75.1 MHz) δ 162.73 (*ipso-Ar*), 150.62, 147.79, 141.18, 136.86, 129.80, 129.07 (Quaternary Carbons), 128.13 (*meta*-*Ar*) 123.70 (Quaternary Carbons) 123.06 (*para-Ar*), 44.19 (sp³ *Pn*), 17.22 (Ar-*C*H₃), 15.53, 14.08, 13.53, 13.23, 11.75, 11.59 (Pn-CH3). The quaternary bridgehead carbon atoms were not observable. Analysis calculated for C₂₂H₂₈Cl₂TiO (%): C, 61.84; H, 6.62; Found: C, 61.71; H, 6.70.

### EXAMPLE 7

**Synthesis of [η⁵-(Pn*H)Ti(O-2,6-Me-C₆H₃)₃]** A solution of [η⁵-(Pn*H)Ti(OC₆H₃Me₂-2,6)Cl₂] (50 mg, 0.12 mmol) and [K(O-2,6-Me₂C₆H₃)] (37.5 mg, 0.24 mmol) in toluene (10 mL) was stirred for 30 minutes at 100°C. The resultant bright orange solution was filtered and the solvent removed under reduced pressure. Subsequent dissolution in minimal hot hexane followed by storage at -35°C for 24 h led to the formation of X-ray quality single crystals. Yield = 65%. ¹H NMR (benzene-*d*₆, 25°C, 300 MHz): δ 6.90 (d, 6H, ³*J*_{HH} = 7.2 Hz, *meta*-Ar-*H*), 6.73 (t, 3H, ³*J*_{HH} = 7.3 Hz, *para*-Ar-*H*) 3.59 (q, 1H, ³*J*_{HH} = 7.7 Hz, Pn-*H*) 2.28 (s, 18H, Ar-C*H*₃) 2.21, 2.14, 1.96, 1.58, 1.53 (s, 3H each, Pn-C*H*₃) 1.08 (d, 3H, ³*J*_{HH} = 7.32 Hz, Pn-C*H*₃). ¹³C{¹H} NMR (benzene-*d*₆, 25°C, 75.1 MHz) δ 164.05 (*ipso-Ar*), 147.30, 144.11, 138.88, 130.71 (*Pn*), 129.06 (*Ar*), 128.93 (*Pn*), 127.41 (*Ar*), 122.49 (*Pn*), 120.79 (*Ar*), 116.96 (*Pn*), 44.46 (sp³ *Pn*), 18.15 (sp³ Pn-C*H*₃), 15.33, 13.37, 12.49, 11.99, 11.75, 11.58 (Pn-*C*H₃).

### Crystallographic details

**[η⁸-(Pn*)Ti(O-2,6-Me-C₆H₃)Cl]** Single crystals were grown from a toluene solution at -35°C, C₂₂H₂₇ClOTi, *M*ᵣ = 390.81, triclinic, P-1, a=11.2997(2) A, b=11.6154(2) Å, c=15.7437(3) Å, α=77.0104(7)°, β=89.3195(7)°. γ=85.2957(8)°, *V*=2006.66(6)Å³, Z=4, *T*=150 K, prism, red brown, 9129 independent reflections, *R*(int)=0.038, R₁=0.046 wR₂=0.133 [l>2σ(l)].

**[η⁸-(Pn*)Ti(O-2,4-^{t}Bu-C₆H₃)Cl]** Single crystals were grown from a benzene solution at -35°C, C₂₈H₃₉ClOTi, *M*ᵣ = 474.97, monoclinic, *P*_{21/}n, a=11.7910(1) Å, b=9.5199(1) Å, c=23.5743(3) Å, α=102.4652(5)°, β=90° γ=90°, *V*=2583.82(5) Å³, Z=4, *T*=150 K, block, purple, 5884 independent reflections, R(int) = 0.029, R₁ = 0.038 wR₂ = 0.091 [l>2σ(l)].

**[η⁸-(Pn*)Ti(O-2,6-Me-C₆H₃)₂]** Single crystals were grown from a toluene solution at -35°C, C₃₀H₃₆O₂Ti, *M*ᵣ = 476.51, Orthorhombic, *P*bca, a=9.2631(1) Å, b=15.4563(1) Å, c=35.7542(3) Å, α=90°, β=90° γ=90°, *V*=5.119.32(8)Å³, Z=8, *T*=150 K, block, dark red, 5807 independent reflections, *R*(int) = 0.036, R₁ = 0.047 wR₂ = 0.092 [l>2σ(l)].

**[η⁸-(Pn*)Ti(O^{t}Bu)Cl]** Single crystals were grown from a hexane solution at -35°C, C₁₈H₂₇ClOTi, *M*ᵣ = 342.76, triclinic, *P*-1, a=8.8527(1)Å, b=10.1475(2)Å, c=10.7183(2)Å, α=79.8812(7)°, β=78.4070(7)°, γ=73.9368(7)°, *V*=898.98(3)Å³, Z=2, T-150 K, block, dark red, 4073 independent reflections, R(int)=0.016, R₁=0.034 wR₂=0.085 [l>2σ(l)].

**[η⁸-(Pn*)Ti(O^{t}Bu)₂]** Single crystals were grown from a benzene solution at -35°C, C₂₂H₃₆O₂Ti, *M*ᵣ = 380.43, monoclinic, *P*2₁/n, a=12.7185(2)A, b=10.9762(1)Å, c=15.9690(2)Å, α=90°, β=93.2853(6)°, γ=90°, *V*= 2225.62(5)Å³, *Z*=4, *T*=150 K, prism, red brown, 5062 independent reflections, *R*(int) = 0.022, R₁ = 0.075 wR₂=0.188 [l>2σ(l)].

**[η⁵-(Pn*H)Ti(O-2,6-Me-C₆H₃)Cl₂]** Single crystals were grown from hexane solution at -35°C, C₂₂H₂₈Cl₂TiO, *M* = 427.27, monoclinic, *P*21/c, a= 8.5552(2)A, *b*=17.7148(5)Å, c=14.6706(4)Å, α = γ = 90.00°, β=106.6445(11), *V*=2130.22(10)Å³, *T*=150(2) K, Z=4, 4844 independent reflections, *R*(int) = 0.019 R₁ = 0.054 wR₂ = 0.119 [l>2σ(l)].

**[η⁵-(Pn*H)Ti(O-2,6-Me-C₆H₃)₃]** Single crystals were grown from hexane solution at -35°C, C₃₈H₄₆TiO₃, *M* = 598.68, monoclinic, *P*21/n, a=8,9702(2)Å, b=24.3863(6)Å, c=14.6936(4)A, α = γ = 90.00°, β=91.352(2), *V*=3213(14)Å³, *T*=150(2) K, Z=4, 6634 independent reflections, *R*(int) = 0.060 R₁ = 0.056 wR₂ = 0.141 [l>2σ(l)].

### EXPERIMENTAL DETAIL II - relating to (hydro)permethylpentalenes

### General procedure

All organometallic syntheses were performed under an inert atmosphere of nitrogen gas, utilizing standard Schlenk techniques on a dual vacuum-inlet gas manifold or Braun glove box. Where necessary, solvents were dried by reflux over the appropriate drying agent: NaK (Et₂O), sodium (THF) and SPS drying system (hexane, pentane, soluene). Solvents were distilled from the desiccant under a flowing stream of nitrogen and transferred using a siphoning technique via steel cannulae and stored in flame-dried glass ampoules under an atmosphere of nitrogen. Deuterated NMR solvents were dried over NaK (benzene-*d*₆, toluene-*d*₈) or CaH₂ (pyridine-*d*₅), vacuum transferred and freeze-pump-thaw-degassed three times prior to use. Elemental analyses were conducted by Mr Stephen Boyer at the elemental analysis service at London Metropolitan University. NMR spectra were recorded using Young's tap NMR tubes on a Varian Mercury VX-Works 300 MHz spectrometer. ¹H and ¹³C{¹H} NMR spectra were referenced to the residual protio-solvent peak.

### X-ray crystallography

Crystals were mounted on glass fibres using perfluoropolyether oil, transferred to a goniometer head on the diffractometer and cooled rapidly to 150 K in a stream of cold nitrogen using an Oxford Cryosystems CRYOSTREAM unit. Data collections were performed using an Enraf-Nonius FR590 KappaCCD diffractometer, utilising graphite-monochromated Mo K_{α} X-ray radiation (A = 0.71073 Å). Intensity data were processed using the DENZO-SMN package. Structures were solved using the direct-methods program SIR92, and refined using full-matrix least squares refinement on all F2 data using the CRYSTALS program suite.

### Polymerisation procedure

The lactide monomer (40 mg) and the complex were introduced in an NMR tube following the desired monomer:initiator ratio. Then 0.57 mL of chloroform-*d*₁ was added to the compounds, leading to an initial monomer concentration of [LA]₀ = 0.5 M. The solution was monitored by ¹H NMR spectroscopy. The conversion was determined by integration of the methane area of the polymer versus the monomer.

### EXAMPLE 8

**Synthesis of Pn*(H)SnMe₃.** To a slurry of Pn*(H)Li (2.09 g, 10.7 mmol) in pentane (20 mL) at -78°C was added a solution of SnMe₃Cl (2.14 g, 10.7 mmol) in pentane (10 mL). The reaction mixture was warmed to room temperature and stirred for 3 h to afford an orange solution and colourless precipitate of LiCl. This was filtered and the volatiles were removed *in vacuo* to afford Pn*(H)SnMe₃ (50:50 mixture of diastereomers judged by ¹H NMR spectroscopy) as an orange oil. Yield: 3.56 g (97%). ¹H NMR (benzene-*d*₆, 23°C): δ 2.98 (q, 1H, ³*J*_{HH}=7.2 Hz, Pn*(*H*)), 2.09 2.05 2.00 (s, 3H each, C*H*₃-Pn*(H)), 1.95 (overlapping s, 3H each, *CH*₃₋Pn*(H)) 1.93 1.83 (s, 3H each, C*H*₃Pn*(H)), 1.70 (overlapping s, 3H each, C*H*₃Pn*(H), 1.59 (s, 3H, C*H*₃-Pn*(H)), 1.18 (d, 3H ³*J*_{HH}=7.2 Hz, 1-C*H*₃-Pn*(H)), 0.94 (d, 3H, ³*J*_{HH}=6.9 Hz, 1-C*H*₃-Pn*(H)), -0.01 (s, 9H, ²*J*_{1H-119Sn} = 25.2 Hz, ²*J*_{1H-117Sn} = 24.2 Hz, 5-SnMe₃-Pn*(H)) -0.03 (s, 9H, ²*J*_{1H-119Sn} = 25.3 Hz, ²*J*_{1H-117Sn} = 24.3 Hz, 5-SnMe₃-Pn*(H)). ¹³C{¹H} NMR (benzene-*d*₆, 23°C): 150.2 147.2 144.6 144.4 129.8 129.4 121.3 119.6 (6 x overlapping resonances, (*q*-Pn*(H)), 44.3 41.8 (1-Pn*(H)), 13.5 13.4 12.8 12.4 121.3 12.2 12.1 12.0 (2 x overlapping resonances *C*H₃-Pn*(H)), 18.2 17.6 (1-*C*H₃-Pn*(H)), -8.8 (5-Sn*Me*₃-Pn*(H), ²*J*_{1H-119Sn} = 153 Hz, ²*J*_{1H-117Sn} = 148 Hz), -9.2 (5-Sn*M*e₃-Pn*(H), ²*J*_{1H-119Sn} = 157 Hz, ²*J*_{1H-117Sn} = 150 Hz).

### EXAMPLE 9

**Synthesis of Pn*(H)TiCl₃**. To a slurry of TiCl₄(thf)₂ (0.408 g, 1.44 mmol) in benzene (2 mL) was added a solution of Pn*(H)SnMe₃ (0.505 g, 1.44 mmol) in benzene (2 mL) to afford a dark-purple solution. The reaction mixture was heated to 80°C for 4 hr. The volatiles were removed *in vacuo* to afford Pn*(H)TiCl₃, as a purple powder. Yield: 0.363 g (74%). Single crystals suitable for an X-ray diffraction study were grown from saturated Et₂O solution at -35°C. ¹H NMR (benzene-*d*₆, 23°C): δ 0.85 (d, 3H, ³*J*_{HH} = 7.5 Hz, 1-C*H*₃-Pn*(H)), 1.57 1.89 2.02 2.03 2.14 (s, 3H each, *CH*₃₋Pn*(H)), 3.80 (q, 1H, ³*J*_{HH} = 8.5 Hz, Pn*(H)). ¹³C{¹H} NMR (benzene-*d*₆, 23°C): δ 153.6 152.7 147.4 140.6 133.3 131.3 127.4 (*q*-Pn*(H)), 46.8 (1-Pn*(H)), 15.4 (1-*CH*₃₋Pn*(H)), 14.5, 14.4, 14.2, 12.2, 11.6 (*CH*₃₋Pn*(H).

### EXAMPLE 10

**Synthesis of [Pn*(H)ZrCl₃]₂**. To a slurry of ZrCl₄ (0.995 g, 4.27 mmol) in benzene (5 mL) was added a solution of Pn*(H)SnMe₃ (1.50 g, 4.27 mmol) in benzene (5 mL). The reaction mixture was heated to 80°C for 72 h to afford a dark-green solution. The volatiles were removed *in vacuo* to yield a green solid. To this was added pentane (15 mL) and the reaction mixture was sonicated for 15 minutes to afford a fine, olive-green powder and a pale-yellow solution. The reaction mixture was filtered and the filtrate was dried under reduced pressure to afford [Pn*(H)ZrCl₃]₂, as an olive-green powder. Yield: 1.42 g (87%). Single crystals were grown from a saturated benzene solution at 23°C. ¹H NMR (benzene-*d*₆, 23°C): δ 0.92 (d, 3H, ³*J*_{HH} = 7.5 Hz, 1-CH₃₋Pn*(H)), 1.81 2.01 2.06 2.17 2.19 (s, 3H each, C*H*₃-Pn*(H)), 3.50 (q, ³*J*_{HH} = 7.5 Hz, Pn*(H)). ¹³C{¹H} NMR (benzene-*d*₆, 23°C): δ 151.0 147.0 142.1 133.5 129.5 127.4 120.7 (*q*-Pn*(H), 46.0 (1-Pn*(H)), 15.6 (1-*CH*₃-Pn*(H)), 14.2 13.6 13.5 12.3 12.2 (*CH*₃₋Pn*(H)).

### EXAMPLE 11

**Synthesis of [Pn*(H)HfCl₃]₂.** To a slurry of HfCL₄ (0.164 g, 0.467 mmol) in benzene (2 mL) was added a solution of Pn*(H)SnMe₃ (0.149 g, 0.467 mmol) in benzene (2 mL). The reaction mixture was heated to 80°C for 2 h to afford an orange solution. The volatiles were removed *in vacuo* to yield [Pn*(H)HfCL₃]₂, as a pale-yellow solid. Single crystals were grown from a saturated benzene solution at room temperature. ¹H NMR (benzene-*d*₆, 23°C): δ 0.93 (d, 3H, ³*J*_{HH} = 7.4 Hz, 1-*CH*₃₋Pn*(H)), 1.62 184 2.01 2.01 2.10 (s, 3H each, *CH*₃-Pn*(H)), 3.42 (q, ³*J*_{HH} = 7.4 Hz, Pn*(H)). ¹³C{¹H} NMR (benzene-*d*₆, 23°C): δ 150.0, 142.3, 137.2, 123.9, 117.4 (*q*-Pn*(H)), 45.5 (1-Pn*(H)), 15.9 (1-*CH*₃₋Pn*(H)) 12.2 12.1 12.0 11.9 11.6 (*CH*₃₋Pn*(H)).

### EXAMPLE 12

**Synthesis of η⁵-Pn*{H)Ti(O*^{t}*Bu)₃.** Pn*(H)TiCl₃ (0.020 g, 0.059 mmol) and KO*^{t}*Bu (0.020 g, 0.18 mmol) were combined in benzene-*d*₆ (0.5 mL) and sonicated for 5 minutes to afford a clear, pale-yellow solution and colourless precipitate. Filtration followed by drying of the filtrate *in vacuo* afforded Pn*(H)Ti(O*^{t}*Bu)₃, 1, as a pale-yellow powder. ¹H NMR (benzene-*d*₆, 23°C): δ 3.35 (q, ³*J*_{HH} = 7.2 Hz, Pn*(*H*)), 2.27 2.24 2.12 2.08 1.84 (s, 3H each, *CH*₃-Pn*(H)), 1.30 (s, 27H, OC(*CH*₃)₃), 1.25 (d, 3H ³*J*_{HH} = 7.3 Hz, 1-*CH*₃₋Pn*(H)). ¹³C{¹H} NMR (benzene-*d*₆, 23°C): δ 141.5 135.1 132.9 128.6 121.0 115.6 110.5 (*q*-Pn*(H)), 75.4 (*OC*(CH₃)₃), 43.7 (1-Pn*(H)), 33.4 (OC(*CH*₃)₃), 16.2 (1-*CH*₃-Pn*(H)), 12.7 12.6 12.1 12.1 11.4 (*CH*₃₋Pn*(H)).

### EXAMPLE 13

**Synthesis of η⁵-Pn*{H)Zr(O*^{t}*Bu)₃.** [Pn*IH)ZrCl₃]₂ (0.028 g, 0.036 mmol) and KO*^{t}*Bu (0.024 g, 0,22 mmol) were combined in benzene-*d*₆ (0.5 mL) and sonicated for 5 minutes to afford a clear pale-yellow solution and colourless precipitate. Filtration followed by drying of the filtrate *in vacuo* afforded Pn*(H)Zr(O'Bu)₃ as a pale-yellow powder. ¹H NMR (benzene-*d*₆, 23°C): δ 3.33 (q, ³*J*_{HH} = 6.9 Hz, Pn*(*H*)), 2.25 2.22 2.09 2.05 1.83 (s, 3H each, *CH*₃₋ Pn*(H)), 1.35 (s, 27H, OC(C*H*₃)₃), 1.23 (d, 3H, ³*J*_{HH} = 6.9 Hz, 1-C*H*₃₋Pn*(H)). ¹³C{¹H} NMR (benzene-*d*₆, 23°C): δ 142.8 137.5 134.4 129.3 123.4 117.8 112.9 (*q*-Pn*(H)), 80.2 (OC(C*H*₃)₃), 43.8 (1-Pn*(H)), 33.1 (OC(*CH*₃)₃), 15.9 (1-*CH*₃₋Pn*(H)), 13.7, 12.8, 12.7, 12.3 12.2 (*CH*₃-Pn*(H)).

### EXAMPLE 14

**Synthesis of η**⁵**-Pn*(H)Zr(O-CH**₂**C**₆**H**₅**)**₃. [Pn*(H)ZrCl₃]₂ (0.100 g, 0.131 mmol) and KO-CH₂C₆H₅ (0.115 g, 0.786 mmol) were combined in C₆H₆ (5 mL) and stirred for 10 minutes to afford a clear, pale-yellow solution and colourless precipitate. Filtration followed by drying of the filtrate *in vacuo* afforded Pn*(H)Zr(O-CH₂C₆H₅)₃ as a pale-yellow oily solid at room temperature. ¹H NMR (benzene-*d*₆, 23°C); δ 7.37 - 7.03 (overlapping m, 15H, C*H*₂C₆H₅), 5.10 (s, 6H, CH₂C₆H₅), 3.12 (q, 1H, ³*J*_{HH} = 7.3 Hz, Pn*(H)), 2.13 2.09 1.99 1.90 1.68 (s, 3H each *CH*₃₋Pn*(H)), 1.13 (d, 3H ³*J*_{HH} = 7.3 Hz, 1-*CH*₃₋Pn*(H)). ¹³C{¹H} NMR (benzene-*d*₆, 23°C): δ 143.9 (CH₂-1-C₆H₅), 143.0 135.4 133.2 (*q*-Pn*(H)), 128.5 (CH₂₋2,3,4-C₆H₅), 127.1 (*q*-Pn*(H)), 126.9 126.4 (CH₂₋2,3,4-C₆H₅), 122.0 116.5 111.3 (*q*-Pn*(H)), 71.7 (CH₂C₆H₅), 43.2 (1-Pn*(H)), 16.2 (1-CH₃-Pn*(H)), 12.3 11.8 11.5 11.0 10.4 (CH₃₋Pn*(H)).

### EXAMPLE 15

**Synthesis of η**⁵**-Pn*(H)Zr(O-*S*-CH(CH**₃**}C**₆**H**₅**)**₃. Pn*(H)ZrCl₃ and S-KOCH{CH₃}C₆H₅ were combined in benzene (5 mL) and stirred for 10 minutes to afford a clear, pale-yellow solution and colourless precipitate. Filtration followed by drying of the filtrate *in vacuo* afforded η⁵-Pn*(H}Zr(O-S-CH{CH₃}C₆H₅)₃, as a pale-yellow oily solid at room temperature. ¹H NMR (benzene-*d*₆, 23°C): ***Two diastereomers:*** δ 7.40 (d, 6H, ³*J*_{HH} = 7.3 Hz, 2,6-C₆*H*₅), 7.11 (m, 3H, 4-C₆H₅), 5.30 (q, 3H, ³*J*_{HH} = 6.1 Hz, C*H*Me), 3.14 3.09 (q, ³*J*_{HH} = 6.9 Hz, Pn*(H)), 2.11 2.11 2.08 2.05 1.97 1.97 1.89 1.88 1.70 1.65 (overlapping s, 3H each, C*H*₃₋Pn*(H)), 1.44 (d, 9H, ³*J*_{HH} = 6.1 Hz, CH*Me*), 1.12 (d, 3H, ³*J*_{HH} = 6.9 Hz, 1-C*H*₃₋Pn*(H)). ¹³C{¹H} NMR (benzene-*d*₆, 23°C): ***Diastereomer 1*:** δ 148.7 142.7 135.5 133.3 (*q*-Pn*(H)), 128.6 (3,5-C₆H₅), 126.9 (2,6-C₆H₅), 125.7 (*q*-Pn*(H)), 125.7 (4-C₆H₅), 122.0 116.4 111.4 (*q-*Pn*(H)), 77.0 (CHMe), 43.4 (1-*Pn**(H)), 28.4 (CH*Me*), 16.1 (1-CH₃₋Pn*(H)), 12.2 11.8 11.8 11.2 10.6 (CH₃₋Pn*(H)). ***Diastereomer 2*:** 148.7 142.7 135.3 133.2 (*q*-Pn*(H)), 128.5 (3,5-C₆H₅), 126.9 (2,6-C₆H₅), 125.9 (4-C₆H₅), 125.5 (*q*-Pn*(H)), 121.8 116.4 111.1 (**q**-Pn*(H)), 77.0 (CHMe), 43.3 (1-*Pn**(H)), 28.4 (CH*Me*), 16.1 (1-CH₃₋Pn*(H)), 12.2 11.8 11.7 11.2 10.5 (CH₃₋Pn*(H)).

### EXAMPLE 16

**Synthesis of η**⁵**-Pn*(H)Zr(O-*rac*-{CH**₃**}C**₆**H**₅**)**₃. Pn*(H)ZrCL₃ and *rac-*KOCH{CH₃}C₆H₅ were combined in benzene (5 mL) and stirred for 10 minutes to afford a clear, pale-yellow solution and colourless precipitate. Filtration followed by drying of the filtrate *in vacuo* afforded η⁵-Pn*(H)Zr(O-*rac-*CH{CH₃}C₆H₅)₃, as a pale-yellow oily solid at room temperature. ¹H NMR (benzene-*d*₆, 23°C): ***Mixture of diastereomers:*** δ 7.48 - 7.10 (overlapping m, 15H, C₆H₅), 5.24 (overlapping q, 3H, C*H*Me), 3.06 (q, 1H, ³*J*_{HH} = 7.3 Hz, Pn&(H)), 2.12 2.12 2.08 2.07 1.98 1.98 1.90 1.69 1.67 (overlapping s, 3H each, *CH*₃₋Pn*(H)), 1.50 1.45 1.44 1.41 (overlapping d, 9H ³*J*_{HH} = 6.4 Hz, CH*Me*), 1.12 (d, 3H, ³*J*_{HH} = 7.3 Hz, 1-*CH*₃₋Pn*(H)). ¹³C{¹H} NMR (benzene-*d*₆, 23°C): ***Mixture of diastereomers:*** δ 148.7 142.7 135.5 133.3 (*q*-Pn*(H)), 128.4 (3,5-C₆H₅), 127.3 (*q*-Pn*(H)), 126.9 (2,6-C₆H₅), 125.6 (4-C₆H₅), 122.0 116.4 111.4 (*q*-Pn*(H)), 77.0 (CHMe), 43.3 (1-Pn*(H)), 28.4 (CH*Me*), 16.1 (1-*CH*₃₋Pn*(H)), 12.2 11.8 11.7 11.2 10.6 (CH₃₋Pn*(H)). Values reported in the ¹³C{¹H} NMR spectrum are the central values of the multiple overlapping resonances observed.

### EXAMPLE 17

**Synthesis of η**⁵**-Pn*(H)Zr(O-2,6-Me-C**₆**H**₃**)**₃**.** [Pn*(H)ZrCl₃]₂ and KO-2,6-Me₂C₆H₃ were combined in benzene (5 mL) and stirred for 10 minutes to afford a clear, pale-yellow solution and colourless precipitate. Filtration followed by drying of the filtrate *in vacuo* afforded Pn*(H)Zr(O-2,6-Me-C₆H₃)₃, as a pale-yellow powder. ¹H NMR (benzene-*d*₆, 23°C): δ 6.93 (d, 6H, ³*J*_{HH} = 7.4 Hz, 3,5-C₆*H*₃), 6.75 (t, 3H, ³*J*_{HH} = 7.3 Hz, 4-C₆*H*₃, 3.31 (q, ³*J*_{HH} = 7.4 Hz, Pn*(H)), 2.25 (s, 18H, O-2,6-C*H*₃-C₆H₃), 2.20 2.12 1.96 1.69 1.54 (s, 3H each, C*H*₃₋Pn*(H)), 1.09 (d, 3H, ³*J*_{HH} = 7.4 Hz, 1-C*H*₃₋Pn*(H)). ¹³C{¹H} NMR (benzene-*d*₆, 23°C): δ 159.7 (1-C₆H₃), 145.3 139.7 135.6 (*q*-Pn*(H)), 128.9 (3,5-C₆H₃), 128.0 (*q*-Pn*(H)), 126.6 (2,6-C₆H₃), 125.7 (*q*-Pn*(H)), 120.4 (4-C₆H₃), 119.0 113.7 (*q*-Pn*(H)), 43.9 (*q*-Pn*(H)), 17.9 (O-2,6-CH₃₋C₆H₃), 15.7 (1-CH₃₋Pn*(H)), 12.5 11.8 11.7 11.0 (CH₃₋Pn*(H)).

### EXAMPLE 18

**Synthesis of η**⁵**-Pn*(H)Zr(O-2,6-***ⁱ***Pr-C**₆**H**₃**)**₃**.** [Pn*(H)ZrCl₃]₂ (0.174 g, 0.225 mmol) and KO-2,6-ⁱPr₂C₆H₃ (0.2925 g, 1.35 mmol) were combined in benzene (5 mL) and stirred for 10 minutes to afford a clear, pale-yellow solution and colourless precipitate. Filtration followed by drying of the filtrate *in vacuo* afforded η⁵-Pn*(H)Zr(O-2,6*ⁱ*Pr-C₆H₃)₃, as a yellow-green powder. Anal. Calcd for C₅₀H₇₀O₃Zr: C, 74.11; H, 8.71. Found: C, 67.68; H, 8.60. ¹H NMR (benzene-*d*₆, 23°C): δ 7.11 - 7.03 (overlapping d, 6H, 3,5-C₆*H*₃), 6.96 (app. t, 3H, ³*J*_{HH} = 6.7 Hz, 4-C₆*H*₃), 3.52 (overlapping sept., 6H ³*J*_{HH} = 6.7 Hz, C*H*(CH₃)₂), 3.11 (q, 1H, ³*J*_{HH} = 7.4 Hz, Pn*(H)), 2.17 2.13 1.93 1.85 1.44 (s, 3H each, C*H*₃-Pn*(H)), 1.32 (d, 12H, ³*J*_{HH} = 6.7 Hz, CH(CH₃)₂, 1.01 (d, 3H, ³*J*_{HH} = 7.4 Hz, 1-C*H*₃-Pn*(H)). ¹³C{¹H} NMR (benzene-*d*₆, 23°C): δ 155.9 155.8 (1-C₆H₃), 146.8 (*q*-Pn*(H)), 140.6 (*q*-Pn*(H)), 137.9 137.7 (2,6-*C*₆H₃), 136.4 127.4 (*q*-Pn*(H)), 123.6 123.5 (3,5-*C*₆H₃), 122.1 122.1 (4-*C*₆H₃) 120.5 116.2 (*q*-Pn*(H)), 43.3 (1-Pn*(H)), 27.3 27.2 (*C*H(CH₃)₂), 24.9 24.8 24.0 23.9 (CH(*C*H₃)₂), 15.6 (1-*C*H₃-Pn*(H)), 12.1 12.0 12.0 11.8 10.9 (*C*H₃-Pn*(H)). One quaternary resonance accounting for a Pn*(H) carbon was overlapping with the residual protio solvent resonance.

### EXAMPLE 19

**Synthesis of η**⁵**-Pn*(H)ZrCl**₂**(O-2,6-***^{t}***Bu-C**₆**H**₃**).** [Pn*(H)ZrCl3]2 (0.239 g, 0.310 mmol) and KO-2,6-*^{t}*Bu₂C₆H₃ (0.152 g, 0.62 mmol) were combined in benzene (5 mL) and stirred for 10 minutes to afford a clear, pale-yellow solution and colourless precipitate. Filtration followed by drying of the filtrate *in vacuo* afforded η⁵-Pn*(H)ZrCl₂(O-2,6-*^{t}*Bu-C₆H₃), as a yellow-green powder. Yield: 0.072 g (42%). ¹H NMR (benzene-*d*₆, 23°C): δ 7.13 (d, 2H, ³*J*_{HH} = 7.7 Hz, 3,5-C₆*H*₃), 6.78 (t, 1H, ³*J*_{HH} = 7.7 Hz, 4-C₆*H*₃), 2.96 (q, 1H, ³*J*_{HH} = 7.4 Hz, Pn*(*H*)), 2.20 2.05 1.98 1.69 (s, 3H each, C*H*₃-Pn*(H)), 1.41 (br. s, 18H, C(C*H*₃)₃), 1.32 (s, 3H, C*H*₃-Pn*(H)), 0.86 (d, 6H, ³*J*_{HH} = 7.4 Hz, CH(C*H*₃)₂). ¹³C{¹H} NMR (benzene-*d*₆, 23°C): δ 161.0 (1-*C*₆H₃), 148.2 145.9 134.4 132.3 (*q*-Pn*(H)), 125.4 (3,5-C₆H₃), 125.2 (*q*-Pn*(H)), 121.4 (4-C₆H₃), 119.6 (*q-*Pn*(H)), 44.7 (1-Pn*(H)), 35.6 (*C*(*C*H₃)₃), 32.1 (*C*(*C*H₃)₃), 15.5 (1-*C*H₃-Pn*(H)), 14.0 12.9 12.4 12.4 116 (*C*H₃-Pn*(H)). Two quaternary resonances accounting for the 2,6-C₆H₃ and a Pn*(H) carbon were overlapping with the residual protio solvent resonance.

### EXAMPLE 20

**Synthesis of η**⁵**-Pn*(H)Hf(O-2,6-Me-C**₆**H**₃**)**₃**.** [Pn*(H)HfCl₃]₂ and KO-2,6-Me₂C₆H₃ were combined in benzene (5 mL) and stirred for 10 minutes to afford a clear, pale-yellow solution and colourless precipitate. Filtration followed by drying of the filtrate *in vacuo* afforded Pn*(H)Hf(O-2,6-Me-C₆H₃)₃, as a pale-yellow powder. ¹H NMR (benzene-*d*₆, 23°C): δ 6.93 (d, 6H, ³*J*_{HH} = 7.4 Hz, 3,5-C₆H₃), 6.74 (t, 3H, ³*J*_{HH} = 7.4 Hz, 4-C₆H₃), 3.27 (q, 1H, ³*J*_{HH} = 7.4 Hz, 4-C₆H₃), 3.27 (q, 1H, ³*J*_{HH} = 7.4 Hz, Pn*(*H*)), 2.24 (s, 18H, O-2,6-C*H*₃-C₆H₃), 2.24 2.16 1.99 1.68 1.56 (s, 3H each, *C*H₃-Pn*(H)), 1.10 (d, 3H, ³*J*_{HH} = 7.4 Hz, 1-C*H*₃-Pn*(H)). ¹³C{¹H} NMR (benzene-*d*₆, 23°C): δ 159.4 (1-*C*₆H₃), 145.1138.7 134.0 (*q*-Pn*(H)), 129.0 (3,5-*C*₆H₃), 127.8 (*q*-Pn*(H)), 126.9 (2,6-C₆H₃), 124.1 (*q*-Pn*(H)), 120.4 (4-C₆H₃), 117.6 112.1 (*q*-Pn*(H)), 43.9 (1-Pn*(H)), 17.8 (O-2,6-CH₃-C₆H₃), 15.5 (1-CH₃₋Pn*(H)), 12.4 11.8 11.6 11.4 10.9 (CH₃₋Pn*(H)).

### EXAMPLE 21

**Synthesis of η**⁵**-Pn*(H)HfCl(O-2,6-***ⁱ***Pr-C**₆**H**₃**)**₂**.** [Pn*(H)HfCl₃]₂ and KO-2,6-*ⁱ*Pr₂C₆H₃ were combined in benzene (5 mL) and stirred for 10 minutes to afford a clear, pale-yellow solution and colourless precipitate. Filtration followed by drying of the filtrate *in vacuo* afforded η⁵-Pn*(H)HfCl(O-2,6-*ⁱ*Pr-C₆H₃)₂, as a pale-yellow powder. ¹H NMR (benzene-*d*₆, 23°C): δ 7.10 - 6.86 (overlapping m, 6H, 3,4,5-C₆*H*₃), 3.52 (overlapping sept., 4H, C*H*(CH₃)₂), 3.11 (q, 1H, ³*J*_{HH} = 7.4 Hz, Pn*(*H*)), 2.25 2.20 1.92 1.92 1.49 (s, 3H each, C*H*₃-Pn*(H)), 1.30 (d, 12H, ³*J*_{HH} =6.5 Hz, CH(C*H*₃)₂), 1.24 1.23 (overlapping d, 6H each, ³*J*_{HH} = 6.5 Hz, CH(C*H*₃)₂) 1.05 (d, 3H, ³*J*_{HH} = 7.4 Hz, 1-C*H*₃-Pn*(H)). ¹³C{¹H} NMR (benzene-*d*₆, 23°C): δ 155.7 155.6 (1-C₆H₃), 146.3 139.1 (*q-*Pn*(H)), 137.9 137.8 (2,6-C₆H₃), 134.7 127.6 125.6 (*q*-Pn*(H)), 123.9 123.5 (3,5-C₆H₃), 122.1 122.0 (4-C₆H₃), 118.5 114.5 (*q*-Pn*(H)), 43.5 (1-Pn*(H)), 27.1 27.0 (CH(CH₃)₂), 24.9 24.9 24.1 24.0 (CH(CH₃)₂), 15.5 (1-CH₃-Pn*(H)), 11.9 11.8 10.8 (CH₃-Pn*(H)).

### EXAMPLE 22

**Synthesis of η**⁵**-Pn*(H)HfCl**₂**(O-2,6-***^{t}***Bu-C**₆**H**₃**).** [Pn*(H)HfCl₃]₂ and KO-2,6-*^{t}*Bu⁻C₆H₃ were combined in benzene (5 mL) and stirred for 10 minutes to afford a clear, pale-yellow solution and colourless precipitate. η⁵-Pn*(H)HfCl₂(O-2,6-*^{t}*Bu-C₆H₃), was identified as the sole product by NMR spectroscopy. NMR yield: (99.5%). ¹H NMR (benzene-*d*₆, 23°C): δ 7.19 (d, 2H, ³*J*_{HH} = 7.7 Hz, 3,5-C₆*H*₃), 6.80 (t, 1H, ³*J*_{HH} = 7.7 Hz, 4-C₆*H*₃), 2.95 (q, 1H, ³*J*_{HH} = 7.4 Hz, Pn*(H)), 2.29 2.16 2.06 1.71 (s, 3H each, C*H*₃-Pn*(H)), 1.42 and 1.44 (br. overlapping s, 18H, C(C*H*₃)₃), 1.36 (s, 3H, C*H*₃₋Pn*(H)), 0.91 (d, 3H, ³*J*_{HH} = 7.4 Hz 1-C*H*₃₋Pn*(H)). ¹³C{¹H} NMR (benzene-*d*₆, 23°C): δ 160.7 (1-C₆H₃),147.5 143.3 133.0 129.6 127.6 (*q*-Pn*(H) or 2,6-*C*₆H₃), 125.4 (3,5-C₆H₃), 123.0 (*q*-Pn*(H) or 2,6-C₆H₃), 121.2 (4-C₆H₃), 117.7 (*q*-Pn*(H) or 2,6-C₆H₃), 44.5 (1-Pn*(H)), 35.6 (*C*(CH₃)₃), 32.1 (C(CH₃)₃, 15.5 (1-CH₃₋Pn*(H)), 13.7, 12.6 12.0 11.4 (CH₃-Pn*(H)). One quaternary resonance accounting for either the 2,6-C₆H₃ or a Pn*(H) carbon was overlapping with the residual solvent resonance.

### EXPERIMENTAL DETAIL III - relating to indenyl-base catalysts

### (not belonging to the invention)

### General Details

Air and moisture sensitive compounds were manipulated under an inert atmosphere of nitrogen, using standard Schlenk line techniques on a dual manifold vacuum/nitrogen line or a Braun Unilab glove box. Reaction solvents (pentane, hexane, and toluene) were dried using an MBraun SPS-800 solvent purification system. Hexane, toluene, and pentane were stored over pre-activated 3 Å molecular sieves. Dry solvents were stored in oven-dried ampoules under an atmosphere of nitrogen, sealed with either Rotoflo or Young's taps. Deuterated solvents used in NMR analysis of air-sensitive compounds were dried over the appropriate drying agent, freeze-thaw degassed and vacuum transferred prior to use: chloroform-*d*₁ (Sigma-Aldrich) was stored over pre-activated 3 Å molecular sieves. NMR spectra were recorded on a 300 MHz Varian Mercury VX-Works spectrometer. ¹H (300.27 MHz) and ¹³C{¹H} (75.50 MHz) spectra were recorded at 25°C unless otherwise stated, and referenced internally to the residual protio-solvent peak in the deuterated solvent used. ¹H and ¹³C{¹H} chemical shifts, δ, are given in parts per million (ppm), are given relative to the residual solvent peaks. Air sensitive samples were prepared under an inert atmosphere in a glove box, using dried solvents in Young's taps NMR tubes. [(Ind)₂ZrMe₂], and complex were synthesised according to literature procedures. [(EBI)ZrCl₂] (Strem Chemicals) was hot re-crystallised in toluene.

### Polymerisation procedure

All polymerisations were carried out in Young's tap NMR tubes containing 40 mg of lactide in a chloroform-*d*₁ solution of initiator (20 mg initiator in 4 mL chloroform-*d*₁), ensuring that the lactide : initiator ratio was 50 : 1. chloroform-*d*₁ was then added to ensure the initial lactide concentration was [LA]₀ = 0.50 M. Polymerisations involving addition *tert*-butanol were prepared as usual, and *tert*-butanol was added to the chloroform-*d*₁ solution *via* microsyringe, ensuring the lactide : initiator: *tert*-butanol ratio was 50 : 1 : 1.

### X-ray crystallography

Crystals were mounted on MiTeGen MicroMants using perfluoropolyether oil, and cooled rapidly to 150 K in a stream of cold nitrogen using an Oxford Cryosystems CRYOSTREAM unit. Data collections were performed using an Enraf-Nonius FR590 KappaCCD diffractometer, utilising graphite-monochromated Mo K_{α} X-ray radiation (λ = 0.71073 Å). Raw frame data were collected at 150(2) K using a Nonius KappaCCD diffractometer, reduced using DENZO-SMN and corrected for absorption using SORTAV. The structure was solved using SuperFlip and refined using full matrix least-squares using CRYSTALS.

### Crystallographic data of [EBI)Zr(O-2,6-Me-C₆H₃)Cl]

Single crystals were grown from a toluene solution at room temperature, C₂₈H₂₅BClOZr, *M*ᵣ = 504.17, orthorhombic, *Pcab*, a = 15.7733(2) Å, b = 23.7683(3) Å, c = 23.9207(4) Å, α = 90°, β = 90°, γ = 90°, *V* = 8968.0(2) Å³, *Z* = 6, *T* = 150 K, block, yellow, 10201 independent reflections, *R*(int) = 0.070, R₁ = 0.057 wR₂ = 0.137 [I>2σ(I)].

### REFERENCE EXAMPLE 23

### Synthesis of [(EBI)Zr(O-2,6-Me-C₆H₃)Cl]

To one equivalent of [EBI)ZrCl₂] (100 mg, 0.24 mmol) in toluene (10 mL), one equivalent of 2,6-dimethylphenol (29 mg, 0.24 mmol) in toluene (10 mL) was added at room temperature. The yellow suspension was left stirring for 18 h, resulting in a clear, yellow solution. Solvent was removed *in vacuo* to afford [(EBI)Zr(O-2,6-Me-C₆H₃)Cl], as a yellow crystalline solid with a yield of 80% (96 mg, 0.19 mmol). ¹H NMR (chloroform-*d*₁, 25°C, 300 MHz): δ 7.84 (1H, dd, Ar*H*, ³*J*_{HH} = 8.7 Hz, ⁴*J*_{HH} = 0.9 Hz), 7.61 (1H, dd, Ar*H*, ³*J*_{HH} = 8.6 Hz, ⁴*J*_{HH} = 0.9 Hz), 7.30-7.27 (2H, m, Ar*H*), 7.20-7.10 (2H, m, Ar*H*), 7.03 (1H, t, ArMe₂*H*, ³*J*_{HH} = 7.5 Hz), 6.78 (2H, d, ArMe₂*H*, ³*J*_{HH} = 7.4 Hz), 6.63-6.55 (2H, m, Ar*H*), 6.54 (1H, d, Cp*H*, ³*J*_{HH} = 3.2 Hz), 6.41 (1H, d, Cp*H*, ³*J*_{HH} = 3.2 Hz), 6.15 (1H, d, Cp*H*, ³*J*_{HH} = 3.2 Hz), 6.02 (1H, d, Cp*H*, ³*J*_{HH} = 3.2 Hz), 3.88-3.62 (4H, m, bridge), 1.91 (6H, s, Ar*Me*₂). ¹³C{¹H} NMR (chloroform-*d*₁, 25°C, 75.5 Mhz): δ 128.2, 126.6, 125.7 125.6, 125.4, 123.7, 123.6, 122.7 121.7, 120.9, 119.5, 115.7, 113.2, 108.4, 106.1 (all non-quaternary ring carbons) 29.6 (*C*₂H₄), 28.7 (*C*₂H₄), 18.0 (2 x Ar*Me*₂). Quaternary carbons unassigned.

### REFERENCE EXAMPLE 24

### Synthesis of [Ind₂Zr(O-2,6-Me-C₆H₃)Me]

To one equivalent of [Ind₂ZrMe₂] (100 mg, 0.28 mmol) in toluene (5 mL), one equivalent of 2,6-dimethylphenol (34 mg, 0.28 mmol) in toluene (5 mL) was added at room temperature. The clear, straw-coloured solution was left stirring for 18 h. Solvent was removed in vacuum to afford [(Ind)₂Zr(O-2,6-Me-C₆H₃)Me], as a colourless oil with a yield of 75% (0.21 mmol, 96 mg). ¹H NMR (chloroform-*d*₁, 25°C, 300 Mhz): δ 7.48-7.43 (2H, m, Ar*H*), 7.34-7.29 (2H, m, Ar*H*), 7.07-7.00 (2H, m, Ar*H*), 6.92-6.85 (2H, m, Ar*H*), 6.82 (2H, d, ArMe₂*H*, ³*J*_{HH} = 7.4 Hz), 6.59 (1H, t, ArMe₂*H*, ³*J*_{HH} = 7.4 Hz), 6.20 (2H, m, Cp*H*), 5.91 (2H, m, Cp*H*), 5.76 (2H, t, Cp*H*, ³*J*_{HH} = 3.4 Hz), 1.86 (6H, s, Ar*Me*₂), 0.22 (3H, s, Zr*Me*). ¹³C{¹H} NMR (chloroform-*d*₁, 25°C, 75.5 Mhz): δ 159.4 (*C*O, Ar), 128.0 (2 x *C*H, Ar), 125.7 (2 x *C* quaternary, Ar), 124.6 (2 x *C*H, Ar), 124.3 (2 x *C*H, Ar), 124.0 (2 x *C* quaternary, Ar), 123.9 (2 x *C*H, Ar), 123.8 (2 x *C* quaternary, Ar), 123.6 (2 x *C*H, Ar), 118.9 (*C*H, Ar), 117.6 (2 x CH, Cp), 100.6 (2 x *C*H, Cp), 99.0 (2 x CH, Cp), 27.8 (Zr*Me*), 17.6 (2 x Ar*Me*₂).

### Examples - Polymerisation of lactides

### (I)

### Polymerisation of L- and rac-lactide

### L- and rac-lactide monomers

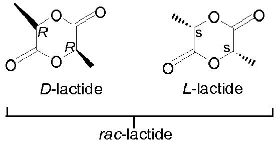

To study the difference between the aryloxide group, pseudo-first order kinetic data of the polymerisation of lactide monomers were carried out with a monomer:initiator: ratio of 50 at 100°C in chloroform-*d*₁. The results are shown in Table 1 and illustrated in Figure 1. The observed propagation rates, *k*_{obs}, were determined by analysis of a semi-logarithmic plot of 1n([LA]₀/[LA]ₜ) *vs.* time, where [LA]₀ = 0.50 mol/L.

**Table 1. L-lactide polymerisation: Variation of the aryloxide substitutent**

| Complex | T (°C) | *k*_{obs} (h⁻¹) | *M*ₙ (g.mol) | *M*_{w}/*M*ₙ |
|---|---|---|---|---|
| 2 | 100 | 0.113±0.014 | - | - |
| 7 | 100 | 0.479±0.032 | - | - |
| 8 | 100 | 0.391±0.022 | 7,547 | 1.74 |
| 9 | 100 | 0.043±0.003 | - | - |
| 10 | 100 | 0.364±0.027 | 9,176 | 1.45 |
| 11 | 100 | 0.463±0.029 | 11,680 | 1.60 |
| 12 | 100 | 0.086±0.020 | 7,669 | 1.53 |

| | | | | |
|---|---|---|---|---|
| Polymerisation conditions: 100°C, [LA]₀ = 50, [LA]₀ = 0.5 M, chloroform-*d*₁. | | | | |

Figure 1 illustrates *L*-lactide polymerisation using the complexes: [η⁵-Pn*(H)Ti(O-2,6-Me-C₆H₃)₃, **2** (black square, *k*_{obs} = 0.113±0.014 h⁻¹), η⁵-Pn*(H)Zr(O-2,6-Me-C₆H₃)₃, **7** (red circle, *k*_{obs} = 0.479±0.032 h⁻¹), η⁵-Pn*(H)Zr(O-2,6-ⁱPr-C₆H₃)₃, **8** (pink triangle, *k*_{obs} = 0.391±0.022 h⁻¹), η⁵-Pn*(H)ZrCl₂(O-2,6-^{t}Bu-C₆H₃), **9** (dark blue triangle, *k*_{obs} = 0.043±0.003 h⁻¹), η⁵-Pn*(H)Hf(O-2,6-Me-C₆H₃)₃, **10** (blue triangle, *k*_{obs} = 0.364±0.027 h⁻¹), η⁵-Pn*(H)HfCl(O-2,6ⁱPr-C₆H₃)₂, **11** (green losange, *k*_{obs} = 0.463±0.029 h⁻¹) and η⁵-Pn*(H)HfCl₂()-2,6*^{t}*Bu-C₆H₃), **12** (purple triangle, *k*_{obs} = 0.086±0.020 h⁻¹). Polymerisation conditions:chloroform-*d*₁ at 100°C with [LA]₀/[M]₀ = 50, [LA)₀ = 0.5 M.

As can be seen in Figure 1, the four complexes based on dimethyl and diisopropyl aromatic group with zirconium and hafnium (**7**, **8**, **10** and **11**) led to the highest constant of propagation (0.364 < *k*_{obs}<0.479 h⁻¹). Both *tert*-butyl complexes (**9** and **12**) demonstrated the lowest rate of polymerisation (with *k*_{obs} of 0.043 h⁻¹ for η⁵-Pn*(H)ZrCl₂(O-2,6-*^{t}*Bu-C₆H₃) and *k*_{obs} of 0.086 h⁻¹ for η⁵-Pn*(H)HfCl₂(O-2,6-*^{t}*Bu-C₆H₃)). When varying the metal using dimethylphenoxide type complexes, it appears that zirconium is faster than hafnium than titanium (*k*_{obs} of 0.479, 0.391 and 0.113 h⁻¹ respectively). These rates are within the literature range.
The polydispersities are relatively high (1.45 < *M*_{w}/*M*ₙ < 1.74) certainly due to high temperature of polymerisation. The molecular weights are slightly higher than the theoretical ones (7,547 < Mn < 11,680 g/mol).
The effect of variation of the alkoxide group substituent on the polymerisation of *L*-lactide has been studied at 100°C, with a monomer:initiator: ratio of 50 in chloroform-*d*₁. When complexes η⁵-Pn*(H)Ti(O*^{t}*Bu)₃, **1**, and η⁵-Pn*(H)Zr(O*^{t}*Bu)₃ **3**, were used no conversion was achieved after 1 h. However, changing the *tert*-butyl group for a benzylic type substituent dramatically increased the rate of the polymerisation with conversion above 90% for η⁵-Pn*(H)Ti(O-CH₂Ph)₃, **4**, η⁵-Pn*(H)Zr(O-*S*-CH{CH₃)C₆H₅)₃, **5**, η⁵-Pn*(H)Zr(O-*rac*-CH{CH₃}C₆H₅)₃, **6**, (93, 96 and 97% respectively).
To study the effect of the chirality on the initiating group, pseudo-first order kinetic data of the polymerisation of lactide monomers were carried out with a monomer: initiator: ratio of 50 at 100°C in chloroform-*d*₁, The results are shown in Table 2 and illustrated in Figures 2-3 and SI.

| Complex | T (°C) | LA | *k*_{obs} (h⁻¹) | *M*ₙ (g/mol) | *M*_{w}/*M*ₙ |
|---|---|---|---|---|---|
| 5 | 100 | *L*- | 3.319±0.754 | 4,549 | 1.37 |
| 6 | 100 | *L*- | 3.442±0.000 | 4,313 | 1.37 |
| 5 | 100 | *rac*- | 1.885±0.268 | 3,056 | 1.44 |
| 6 | 100 | *rac-* | 2.782±0.168 | 2,693 | 1.36 |
| 5 | 80 | *L-* | 1.166±0.068 | 3,993 | 1.15 |
| 6 | 80 | *L-* | 1.954±0.063 | 4,106 | 1.18 |
| 5 | 80 | *rac-* | 1.342±0.055 | 3,109 | 1.18 |
| 6 | 80 | *rac-* | 1.667±0.053 | 3,856 | 1.24 |
| 5 | 60 | *L*- | 0.484±0.037 | - | - |
| 6 | 60 | *L-* | 0.850±0.063 | - | - |
| 5 | 60 | *rac-* | 0.491±0.031 | - | - |
| 6 | 60 | *rac-* | 0.767±0.037 | - | - |

| | | | | | |
|---|---|---|---|---|---|
| Polymerisation conditions: [LA]_{0/}[M]₀ = 50, [LA]₀ = 0.5 M, chloroform-*d*₁. | | | | | |

Figure **2** shows lactide polymerisation: *L*-lactide and η⁵-Pn*(H)Zr(O-*S-*CH{CH₃}C₆H₅)₃, **5** (black square, *k*_{obs} = 1.166±0.068 h⁻¹); *L*-lactide and η⁵-Pn*(H)Zr(O-*rac*-CH{CH₃}C₆H₅)₃, **6** (red circle, *k*_{obs} = 1.954±0.063 h⁻¹); *rac-*lactide and η⁵-Pn*(H)Zr(O-*rac*-CH{CH₃}C₆H₅)₃, **6** (pink triangle, *k*_{obs} = 1.667±0.053 h⁻¹); *rac*-lactide and η⁵-Pn*(H)Zr(O-*S*-CH{CH₃}C₆H₅)₃, **5** (blue triangle, *k*_{obs} = 1.342±0.055 h⁻¹). Polymerisation conditions:chloroform-*d*₁ at 80°C with [LA]₀/[M]₀ = 50, [LA]₀ = 0.5 M.

Figure **3** shows lactide polymerisation: *L*-lactide and η⁵-Pn*(H)Zr(O-*S-*CH{CH₃}C₆H₅)₃, **5** (black square, *k*_{obs} = 0.484±0.037 h⁻¹); *L*-lactide and η⁵-Pn*(H)Zr(O-*rac*-CH{CH₃}C₆H₅)₃, **6** (red circle, *k*_{obs} = 0.850±0.063 h⁻¹); *rac-*lactide and η⁵-Pn*(H)Zr(O-*rac*-CH{CH₃}C₆H₅)₃, **6** (pink triangle, *k*_{obs} = 0.767±0.037 h⁻¹); *rac*-lactide and η⁵-Pn*(H)Zr(O-*S*-CH{CH₃}C₆H₅)₃, **5** (blue triangle, *k*_{obs} = 0.491±0.031 h⁻¹). Polymerisation conditions:chloroform-*d*₁ at 60°C with [LA]₀/[M]₀ = 50, [LA]₀ = 0.5 M.
Both complexes η⁵-Pn*(H)Zr(O-*S*-CH{CH₃}C₆H₅)₃, 5, η⁵-Pn*(H)Zr(O-*rac-*CH{CH₃}C₆H₅)₃, **6** demonstrated very high rate of polymerisation for *L*- and *rac*-lactide (1.885 < *k*_{obs} < 3.442 h⁻¹) at 100°C. Over the three temperatures (60, 80 and 100°C), the racemic complex polymerised faster both lactide monomers. At 60°C, the observed propagation rates when using *rac-*η⁵-Pn*(H)Zr(O-CH{CH₃}C₆H₅)₃, **6** are around 70% faster (*k*_{obs} of 0.850 h⁻¹ for *L-*lactide and 0.767 h⁻¹ for *rac-*lactide) than when η⁵-Pn*(H)Zr(O-*S-*CH{CH₃}C₆H₆)₃ **5** was used (*k*_{obs} of 0.484 h⁻¹ for *L*-lactide and 0.491 h⁻¹ for *rac*-lactide). *L*- and *rac*-lactide appears to be polymerised at similar rates of polymerisation.
The polydispersities decreased with decreasing temperature (1.27 < *M*_{w}/*M*ₙ *<* 1.44 for 100°C and 1.15 < *M*_{w}/*M*ₙ *<* 1.24 for 80°C). The molecular weight experimental are half of the theoretical (2,693 < *M*ₙ < 4,549 g/mol).
The activation parameters for the ring-opening polymerisation of *L*- and *rac-*lactide initiated using η⁵-Pn*(H)Zr(O-*S*-CH{CH₃}C₆H₅)₃, **5**, η⁵-Pn*(H)Zr(O-*rac-*CH{CH₃}C₆H₅)₃, **6** were determined using Eyring plots and found to be 30.4 < ΔH^{#} < 46.6 kJ/mol and 411.4 < ΔS^{#} < 640 J/(mol K), Figure 4 and SI.

Figure **4** is an Eyring plot of *L*-lactide polymerisation using η⁵-Pn*(H)Zr(O-*S-*CH{CH₃}C₆H₅)₃, **5**. Slope = -5610±488 with *R*² = 0.993. Polymerisation conditions: chloroform-*d*₁ with [LA]₀/[Zr]₀ = 50 and [LA]₀ = 0.5 M.
Pseudo-first order kinetic data of the polymerisation of *L*-lactide to study the effect of variation of the concentration of the monomer:initiator ratio at 100°C in chloroform-*d*₁ using η⁵-Pn*(H)Zr(O-2,6*ⁱ*Pr-C₆H₃)₃, **8**. The results are collated in Table 3 and illustrated Figure 5.

**Table 3. L-lactide polymerisation: Variation of the concentration**

| Complex | [LA]₀/ [Zr]₀ | *k*_{obs} (h⁻¹) | *M*ₙ (g/mol) | *M*_{w}/*M*ₙ |
|---|---|---|---|---|
| 8 | 25 | 0.521±0.021 | 6,920 | 1.72 |
| 8 | 50 | 0.391±0.022 | 7,547 | 1.74 |
| 8 | 100 | 0.377±0.015 | 9,870 | 1.40 |
| 8 | 200 | 0.235±0.004 | 17,042 | 1.54 |

| | | | | |
|---|---|---|---|---|
| Polymerisation conditions: 100°C, [LA]₀ = 0.5 M, chloroform-*d*₁. | | | | |

Figure 5 shows *L*-lactide polymerisation using η⁵-Pn*(H)Zr(O-2,6-Pr-C₆H₃)_{3,} **8**: [LA]₀/[Zr]₀ - 25 (black square, *k*_{obs} = 0.521±0.021 h⁻¹); [LA]₀/[Zr]₀ = 50 (red circle, *k*_{obs} = 0.391±0.022 h⁻¹); [LA]₀/[Zr]₀ = 100 (blue triangle, *k*_{obs} = 0.377±0.015 h⁻¹); [LA]₀/[Zr]₀ = 200 (pink triangle, *k*_{obs} = 0.235±0.004 h⁻¹). Polymerisation conditions:chloroform-*d*₁ at 100°C with [LA]₀ = 0.5 M.
As expected the rate of the polymerisations of *L*-lactide at 100°C in chloroform-*d*₁ increased with decreasing monomer:initiator ratio (*k*_{obs} of 0.235, 0.377, 0.391 and 0.521 h⁻¹ for [LA]₀/[Zr]₀ of 200, 100, 50 and 25 respectively). Furthermore, the molecular weights, *M*ₙ, increased with increasing concentration from 6,920 to 17,042 g/mol for initial monomer:initiator ratio of 25 to 200 respectively. The polydispersities, *M*_{w}/*M*ₙ, are varying between 1.40 < *M*_{w}/*M*ₙ < 1.74.
The observed rate of the propagation of *L*-lactide using η⁵-Pn*(H)Zr(O-2,6-Pr-C₆H₃)_{3,} **8**, demonstrated a pseudo first-order kinetic as a function of the initiator (Figure 6).

Figure 6 shows a plot of Ln(*k*_{obs}) vs Ln([ZR]₀) using η⁵-Pn*(H)Zr(O-2,6-Pr-C₆H₃)₃, **8**. Slope = 0.350±82 with *R*² = 0.901. Polymerisation conditions: chloroform-*d*₁ at 100°C and [LA]₀ = 0.5 M.
Pseudo-first order kinetic data of the polymerisation of *L*-lactide to study the effect of temperature with monomer:initiator ratio of 50 in chloroform-*d*₁ using η⁵-Pn*(H)Zr(O-2,6-Pr-C₆H₃)_{3,} **8**. The results are collated in Table **4** and illustrated Figure 7.

**Table 4. L-lactide polymerisation: Variation of the temperature**

| Complex | T (°C) | *k*_{obs} (h⁻¹) | *M*ₙ (g/mol) | *M*_{w}/*M*ₙ |
|---|---|---|---|---|
| 8 | 100 | 0.391±0.022 | 6,920 | 1.72 |
| 8 | 90 | 0.151±0.008 | 7,751 | 1.59 |
| 8 | 80 | 0.092±0.006 | 6,348 | 1.58 |

| | | | | |
|---|---|---|---|---|
| Polymerisation conditions: [LA]₀/[M]₀ = 50, [LA]₀ = 0.5 M, chloroform-*d*₁. | | | | |

Figure 7 shows *L*-lactide polymerisation using η⁵-Pn*(H)Zr(O-2,6-Pr-C₆H₃)_{3,} **8**: T = 100°C (black square, *k*_{obs} = 0.391±0.022 h⁻¹); T = 90°C (red circle, *k*_{obs} = 0.151±0.008 h⁻¹); T = 80°C (blue triangle, *k*_{obs} - 0.092±0.006 h⁻¹). Polymerisation conditions: chloroform-*d*₁ with [LA]₀/[M]₀ = 50, [LA]₀ - 0.5 M.

As expected the rate of the polymerisations of *L*-lactide in chloroform-*d*₁ decreased with decreasing temperature (*k*_{obs} of 0.391, 0.151 and 0.092 h⁻¹ for T of 100, 90 and 80 respectively). The molecular weights, *M*ₙ, remain constant between 6,348 to 7,751 g/mol which are very close to the theoretical ones. However, the polydispersities, *M*_{w}/*M*ₙ*,* decreased with decreasing temperature from 1.72 to 1.58 for 100 to 80°C respectively.
The activation parameters for the ring-opening polymerisation of *L*- initiated using η⁵-Pn*(H)Zr(O-2,6-Pr-C₆H₃)₃, **8** were determined using Eyring plots and found to be ΔH^{#} = 75.9 kJ/mol and ΔS^{#} = 1847 J/(mol K), Figure 8.

Figure 8 shows an Eyring plot of L-lactide polymerisation using η⁵-Pn*(H)Zr(O-2,6-Pr₂C₆H₃)_{3,} **8**. Slope = -9133±1881 with *R*² = 0.959.

Polymerisation conditions: chloroform-*d*₁ with [LA]₀/[Zr]₀ = 50 and [LA]₀ = 0.5 M.
The synthesized polylactides were characterised by ¹H, ¹H{¹H} and ¹³C{¹H} NMR spectroscopy. The NMR spectra demonstrated no epimerisation when *L*-lactide was polymerised and an isotactic biased PLA when *rac*-lactide was polymerised.
They have also been characterised by MALDI-TOF and ¹³C{¹H} NMR spectroscopy to determine the end of chains. It was shown that the lactide monomers inserted in the metal-oxygen bond.

### (II)

Pseudo-first order kinetic data of the polymerisation of *L*-lactide at 80°C in beneze-*d*₆, with an initiator:monomer ratio of 1:50, using selected permethylpentalene complexes are shown in Figure 9. The kinetic data for all polymerisations displayed an induction period that varied depending on the initiating complex. As such, the data in Figure 9 is given from 32 h, by which time all induction periods had ended.
The complex that exhibited by far the highest activity towards the ring-opening polymerisation of lactide isomers was [η⁸-(Pn*)Ti(O-2,6-Me-C₆H₃)₂]. It demonstrates a rate of polymerisation similar to published titanium complexes (*k*_{obs} = 69.9 x 10⁻³ h⁻¹)³⁷ and ten times faster than the complexes [η⁸-(Pn*)Ti(O-2,6-Me-C₆H₃)Cl] and [η⁸-(Pn*)Ti(O-2,4-Bu-C₆H₃)Cl] at 80°C which demonstrated similar rates of propagation, (*k*_{obs} = 7.2 x 10⁻³ h⁻¹ and 7.0 x 10⁻³ h⁻¹ respectively). These rates of propagation being 3.5 times faster than when [η⁵-(Pn*)Ti(O-2,6-Me-C₆H₃)Cl₂] was used (*k*_{obs} = 1.9 x 10⁻³ h⁻¹).

Figure 9 shows semi-logarithmic plots of *L*-lactide conversion vs time, [LA]₀/[Init]₀ = 50, [LA]₀ = 0.104 M, *T* = 80°C, benzene-*d*₆ (0.5 mL), using [η⁸-(Pn*)Ti(O-2,6-Me-C₆H₃)Cl], (green dotted line), [η⁸-(Pn*)Ti(O-2,4-*^{t}*Bu-C₆H₃)Cl], (black dashed line) [η⁸-(Pn*)Ti(O-2,6-Me-C₆H₃)₂] (red line) and [η⁵-(Pn*H)Ti(O-2,6-Me-C₆H₃)Cl₂] (blue dot-dashed line). Induction period omitted.

As is shown in Figure 10, at 90°C, when initiated by [η⁸-(Pn*)Ti(O-2,6-Me-C₆H₃)₂], *rac*- and *L*-lactide polymerise at the same rate (*k*_{obs} ≈ 110 x 10⁻³ h⁻¹). This is presumably because the achiral initiator cannot distinguish between both lactide enantiomers and has incorporated each at the same rate. This absence of stereochemical preference suggests that the polymerisation goes by a chain-end controlled mechanism.

Figure 10 shows semi-logarithmic plots of lactide monomers conversion vs time. Induction period omitted. [LA]₀ = 0.104 M, [LA]₀/[Init]₀ = 50, T = 90°C, benzene-*d*₆. Polymerisation using [η⁸-(Pn*)Ti(O-2,6-Me-C₆H₃)₂], *L*-lactide (red line) and *rac*-lactide (black dashed line).

Polymerisations of *L*-lactide using [η⁸-(Pn*)Ti(O-2,6-Me-C₆H₃)₂] were carried out in the temperature range of 80 to 100°C and the results were collated to an Eyring plot. From the Eyring plot an estimation of the activation parameters were obtained: ΔH^{#} = 75.15 kJ mol⁻¹, ΔS^{#} = -125.85 J K⁻¹ mol⁻¹, ΔG^{#} (100°C) = 87.74 kJ mol⁻¹. The modest value of ΔH^{#} is typical for attack on a carbonyl group coordinated to a metal centre and the negative and relatively high value of ΔS^{#} implies a high degree of order in the transition state. As such, all parameters are consistent with a coordination insertion mechanism displaying a highly ordered transition state. The polymerisation of *L*-lactide leads to isotactic PLA and *rac*-lactide to atactic PLA.

### (III)

Pseudo-first order kinetic data of the polymerisation of *L*-lactide using [(EBI)Zr(O-2,6-Me-C₆H₃)Cl], [(Ind)₂Zr(O*^{t}*Bu)Me], and [(Ind)₂Zr(O-2,6-Me-C₆H₃)Me] are shown in Figure 11. All initial polymerisation studies were carried out at 80°C in chloroform-*d*₁, with an *L*-LA : initiator ratio of 50:1, ensuring [LA]₀ - 0.50 M.

Figure 12 shows semi-logarithmic plots of *L*-lactide conversion vs time, [LA]₀/[Init]₀ = 50, [LA]₀ = 0.50 M, T = 80°C, chloroform-*d*¹ (0.5 mL), polymerisation using [(EBI)Zr(O-2,6-Me-C₆H₃)Cl], (dotted line), [(lnd)₂Zr(O*^{t}*Bu)Me], (solid line), [(lnd)₂Zr(O-2,6-Me-C₆H₃)Me], (dashed line).
Figure 12 shows that complex [(lnd)₂Zr(O*^{t}*Bu)Me] displayed the highest activity with 84% conversion in eight hours (*k*_{obs} = 0.24 h⁻¹) and no initiation period. This is comparable to moderate activities of zirconium initiators in the literature. A significantly lower activity was displayed by [(lnd)₂Zr(O-2,6-Me-C₆H₃)Me] which achieved 74% conversion after 28 h (*k*_{obs} = 0.05 h⁻¹), at a rate 4.5 times slower than [(lnd)₂Zr((O*^{t}*Bu)Me]. Interestingly, [(Ind)₂Zr(O-2,6-Me-C₆H₃)Me] displayed an initiation period of around half an hour. These observations are rationalised by the increased bulk of the aryl-oxide substituent of [(lnd)₂Zr(O-2,6-Me-C₆H₃Me] compared to the *tert*-butoxide substituent of [(lnd)₂Zr(O*^{t}*Bu)Me]. In comparison, [(EBI)Zr(O-2,6-Me-C₆H₃)Cl] exhibited the lowest catalytic activity, managing 4.2% conversion in 28 h (*k*_{obs} = 0.002 h⁻¹) which is comparable to *rac*-[(EBI)Zr(OC{O*ⁱ*Pr}=CMe₂)] (7% conversion in 18 h at 80°C in toluene) synthesised by Ning et al, Organometallics, 2008, 27, 5632. The rate of [(EBI)Zr(O-2,6-Me-C₆H₃)Cl] is two orders of magnitude less than [(lnd)₂Zr(O*^{t}*Bu)Me] and [(lnd)₂Zr(O-2,6-Me-C₆H₃)Me], probably due to both the increased bulk of the aryloxide compared to the *tert*-butoxide and the increased rigidity conferred by the ansa-bridged ligand, preventing reorientation of the indenyl moieties.

As [(lnd)₂Zr(O*^{t}*Bu)Me] showed the highest rate of polymerisation, further studies were carried out to investigate its stereoselectivity and estimate its activation. Polymerisations using [(lnd)₂Zr(O*^{t}*Bu)Me] as the initiator were carried out between 60°C and 100°C, with the same LA : initiator ratios and [LA]₀ as used previously. The enthalpy of activation (ΔH^{‡}) and the entropy of activation (ΔS^{‡}) were calculated from a plot of ln(*k*_{obs}/T) *vs.* (1/T) (Fig.12), giving ΔH^{‡} = 46.9 kJ.mol⁻¹ and ΔS^{‡} = -193.9 J.K⁻¹.mol⁻¹. These values are consistent with the literature; typical for a bimolecular reaction, and a coordination-insertion mechanism.
Furthermore, it was found that polymerisation of *L*-LA (*k*_{obs} = 0.24 h⁻¹) was twice as fast as *rac*-LA (*k*_{obs} = 0.11 h⁻¹) with [(lnd)₂Zr(O*^{t}*Bu)Me] at 80°C with similar [LA]₀:[2]₀ ratio of 50:1 (Fig.13). This is probably due to the energy barrier required to invert the chiral configuration at the metal centre, which is indicative of a chain-end control mechanism.
The ¹H{¹H} NMR spectrum of the polymerisation of *rac*-LA using [(lnd)₂Zr(O*^{t}*Bu)Mel as initiator demonstrated a bias towards isotactic PLA, *P*ᵢ of 72%.
Polymerisations of *L*-LA and *rac*-LA were repeated at 80°C with the addition of *tert*-butanol in stoichiometric amounts with [(lnd)₂Zr(O*^{t}*Bu)Me]. The addition of *tert*-butanol has little effect on *k*_{obs} for both *L*-LA and *rac*-LA. The rate of polymerisation for *L*-LA without alcohol is similar to the one with (*k*_{obs} of 0.24 h⁻¹ and 0.23 h⁻¹ respectively). Similarly the rates for the polymerisations of *rac*-LA were (k_{obs} of 0.11 h⁻¹ and 0.10 h⁻¹ respectively). The molecular weights and polydispersities of the polymerisation of *L*-LA and *rac*-LA with and without *tert*-butanol are collated in Table 5. As an initiator, [(lnd)₂Zr(O*^{t}*Bu)Me] demonstrated highly controlled polymerisation of *L*-LA and *rac*-LA at 80°C with a LA : initiator ratio of 50 : 1 in chloroform-*d*₁, as shown by low polydispersities (1.08 < *M*_{w}/*M*ₙ < 1.12). The addition of *tert*-butanol does not affect the polydispersities; however, the experimental molecular weights appear more controlled in the presence of the alcohol, as expected of immortal polymerisation.

**Table 5. Polymerisation data for L- and rac-lactide using 2^{a}**

| | Alcohol | *M*_{n,theo}/ *M*_{n,exp} | *M*_{n,exp}^{b} (g.mol-1) | *M*_{w}/*M*ₙ^{b} |
|---|---|---|---|---|
| *rac-La* | no | 1.96 | 11171 | 1.08 |
| *rac*-LA | yes | 0.96 | 5779 | 1.10 |
| *S*, *S*-LA | no | 2.19 | 13813 | 1.12 |
| *S*, *S*-LA | yes | 1.45 | 9065 | 1.09 |

| | | | | |
|---|---|---|---|---|
| Polymerisation conditions; [LA]₀/[2]₀ = 50, [LA]₀ = 0.5M, 80°C. | | | | |

Measured by GPC with polystyrene standards in THF. *M*_{n,theo} = [LA]₀/[2]₀ x M_{LA} x conv.

## Claims

1. A compound having the formula
LₐM(OR¹)_{b}R²_{c}X_{d}
wherein
M is a metal selected from Ti, Zr and Hf;
L is a ligand selected from permethylpentalene, (hydro)permethylPentalene and (hydro)pentalene;
R¹ is a 1-6C alkyl, substituted or unsubstituted phenyl, or a substituted or unsubstituted phenylalkylene group;
R² is Me or Et;
X is halogen;
a = 1 to 3, b = 1 to 3, c = 0 or 1 and d = 0, 1, 2 or 3;
and dimers thereof.

2. The compound according to claim 1, wherein L is permethylpentalene and X is Cl.

3. The compound according to either claim 1 or claim 2, wherein R¹ is a group selected from -^{t}Bu, -C₆H₃(R₃)₂, where R³ is 1-4C alkyl, and -CH(R⁴)Ph, where R⁴ is H or 1-4C alkyl.

4. The compound according to claim 3, wherein R¹ is selected from 2,6-dimethylphenyl, 2,6-diisopropylphenyl and 2,6-di*^{t}*butylphenyl.

5. The compound according to claim 3 or claim 4, wherein R⁴ is Me.

6. The compound according to any one of claims 1 to 5, wherein M is Ti.

7. The compound according to any one of claims 1 to 5, wherein M is Zr.

8. The compound according to any one of claims 1 to 5, wherein M is Hf.

9. A use of a compound according to any one of claims 1 to 8 as an initiator in the polymerisation of a lactide monomer.

10. The use according to claim 9, wherein the lactide monomer is *L*-lactide.

11. The use according to claim 9, wherein the lactide monomer is *rac-*lactide.

12. A process for producing a polylactide which comprises contacting a lactide monomer with a compound according to any one of claims 1 to 8.

13. The process according to claim 12, wherein the lactide monomer is *L-*lactide and the polylactide is isotactic polylactide.

14. The process according to claim 12, wherein the lactide monomer is *rac*-lactide and the polylactide is atactic polylactide.

## Patentansprüche

1. Verbindung mit der Formel LₐM(OR¹)_{b}R²_{c}X_{d}, wobei M ein Metall ist, ausgewählt aus Ti, Zr und Hf;
L ein Ligand ist, ausgewählt aus Permethylpentalen, (Hydro)permethyl-Pentalen und (Hydro)pentalen;
R¹ ein 1-6C-Alkyl, substituiertes oder unsubstituiertes Phenyl, oder eine substituierte oder unsubstituierte Phenylalkylen-Gruppe ist;
R² Me oder Et ist;
X Halogen ist;
a = 1 bis 3, b = 1 bis 3, c = 0 oder 1 und d = 0, 1,2 oder 3; und
Dimere davon.

2. Verbindung nach Anspruch 1, wobei L Permethylpentalen ist und X Cl ist.

3. Verbindung nach Anspruch 1 oder Anspruch 2, wobei R¹ eine Gruppe ist, ausgewählt aus -^{t}Bu, -C₆H₃(R₃)₂, wo R³ 1-4C-Alkyl und -CH(R⁴)Ph ist, wo R⁴ H oder 1-4C-Alkyl ist.

4. Verbindung nach Anspruch 3, wobei R¹ ist ausgewählt ist aus 2,6-Dimethylphenyl, 2,6-Diisopropylphenyl und 2,6-di*^{t}*Butylphenyl.

5. Verbindung nach Anspruch 3 oder Anspruch 4, wobei R⁴ Me ist.

6. Verbindung nach einem der Ansprüche 1 bis 5, wobei M Ti ist.

7. Verbindung nach einem der Ansprüche 1 bis 5, wobei M Zr ist.

8. Verbindung nach einem der Ansprüche 1 bis 5, wobei M Hf ist.

9. Verwendung einer Verbindung nach einem der Ansprüche 1 bis 8 als ein Initiator bei der Polymerisation von einem Lactidmonomer.

10. Verwendung nach Anspruch 9, wobei das Lactidmonomer ist *L*-Lactid ist.

11. Verwendung nach Anspruch 9, wobei das Lactidmonomer *rac*-Lactid ist.

12. Verfahren zum Herstellen eines Polylactids, das ein Inkontaktbringen eines Lactidmonomers mit einer Verbindung nach einem der Ansprüche 1 bis 8.

13. Verfahren nach Anspruch 12, wobei das Lactidmonomer *L*-Lactid ist und das Polylactid isotaktisches Polylactid ist.

14. Verfahren nach Anspruch 12, wobei das Lactidmonomer *rac*-Lactid ist und das Polylactid ataktisches Polylactid ist.

## Revendications

1. Composé représenté par la formule
LₐM(OR¹)_{b}R²_{c}X_{d}
dans laquelle
M représente un métal choisi parmi Ti, Zr et Hf ;
L représente un ligand choisi parmi le perméthylpentalène, l'(hydro)perméthylpentalène et l'(hydro)pentalène ;
R¹ représente un groupe alkyle en C₁ à C₆, un groupe phényle substitué ou non substitué, ou un groupe phénylalkylène substitué ou non substitué ;
R² représente un groupe Me ou Et ;
X représente un atome d'halogène ;
a = 1 à 3, b = 1 à 3, c = 0 ou 1 et d = 0, 1, 2 ou 3 ;
et dimères de celui-ci.

2. Composé selon la revendication 1, L représentant le perméthylpentalène et X représentant un atome Cl.

3. Composé selon la revendication 1 ou 2, R¹ représentant un groupe choisi parmi -^{t}Bu, -C₆H₃(R₃)₂, où R³ représente un groupe alkyle en C₁ à C₄, et -CH(R⁴)Ph, où R⁴ représente un atome H ou un groupe alkyle en C₁ à C₄.

4. Composé selon la revendication 3, R¹ étant choisi parmi un groupe 2,6-diméthylphényle, 2,6-diisopropylphényle et 2,6-di*^{t}*butylphényle.

5. Composé selon la revendication 3 ou 4, R⁴ représentant un groupe Me.

6. Composé selon l'une quelconque des revendications 1 à 5, M représentant un atome Ti.

7. Composé selon l'une quelconque des revendications 1 à 5, M représentant un atome Zr.

8. Composé selon l'une quelconque des revendications 1 à 5, M représentant un atome Hf.

9. Utilisation d'un composé selon l'une quelconque des revendications 1 à 8 comme initiateur dans la polymérisation d'un monomère de lactide.

10. Utilisation selon la revendication 9, ledit monomère de lactide étant le *L*-lactide.

11. Utilisation selon la revendication 9, ledit monomère de lactide étant le *rac*-lactide.

12. Procédé de production d'un polylactide qui comprend la mise en contact d'un monomère de lactide avec un composé selon l'une quelconque des revendications 1 à 8.

13. Procédé selon la revendication 12, ledit monomère de lactide étant le *L*- lactide et le polylactide étant le polylactide isotactique.

14. Procédé selon la revendication 12, ledit monomère de lactide étant le *rac*-lactide et le polylactide étant le polylactide atactique.
